(19) Europäisches Patentamt
European Patent Office
Office européen des brevets

(11) EP 2 256 059 A2

(12) EUROPEAN PATENT APPLICATION
published in accordance with Art. 153(4) EPC

(43) Date of publication:
**01.12.2010 Bulletin 2010/48**

(21) Application number: **09723247.4**

(22) Date of filing: **20.03.2009**

(51) Int Cl.:
***B65D 51/24*** *(2006.01)* ***B65D 81/20*** *(2006.01)*
***B65D 39/16*** *(2006.01)* ***B01J 20/28*** *(2006.01)*

(86) International application number:
**PCT/KR2009/001453**

(87) International publication number:
**WO 2009/116844 (24.09.2009 Gazette 2009/39)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **20.03.2008 KR 20080025808**
**16.03.2009 KR 20090022323**

(71) Applicant: **Korea University Research and Business Foundation**
**Seongbuk-gu**
**Seoul 136-713 (KR)**

(72) Inventors:
- **PARK, Hyun Jin**
  **Seoul 142-100 (KR)**
- **LEE, Jin Soo**
  **Seoul 135-230 (KR)**
- **HAN, Sung Sik**
  **Seoul 135-100 (KR)**
- **YU, Jin Young**
  **Seoul 136-071 (KR)**
- **LEE, Jin Chul**
  **Geoje-si**
  **Gyeongsangnam-do 656-050 (KR)**
- **YOO, Ki Ho**
  **Incheon 406-130 (KR)**

(74) Representative: **Pfenning, Meinig & Partner GbR**
**Patent- und Rechtsanwälte**
**Theresienhöhe 13**
**80339 München (DE)**

# (54) WINE BOTTLE CAP ASSEMBLY, AND MANUFACTURING METHOD AND APPARATUS THEREOF

(57) Disclosed is a wine bottle cap assembly. When a resealed wine bottle is stored standing upright, an oxygen absorbent is located below a lower part of a cap body while being distanced from the cap body. Thus, oxygen, which is heavier than nitrogen and sinking downward, is rapidly removed. Even when the wine bottle is stored lying down, the oxygen absorbent does not sink into the wine, so oxygen absorption is efficiently performed.

【Fig 5】

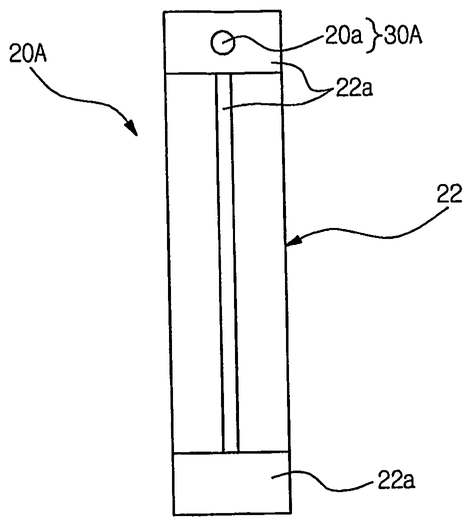


EP 2 256 059 A2

## Description

[Technical Field]

The present invention relates to a wine bottle cap assembly and manufacturing method and apparatus thereof. More particularly, the present invention relates to a wine bottle cap assembly and manufacturing method and apparatus thereof, capable of effectively removing oxygen contained in a wine bottle when the wine bottle is resealed.

[Background Art]

Wine is one of representative foods subject to rapid rancidity. In order to prevent rancidity from occurring in the wine during the circulation, a wine bottle is made from glass and sealed with a cork cap. Once the wine bottle is open, the wine comes into contact with oxygen in the atmosphere so that oxidation of the wine is initiated. If the wine is over-oxidized, quality of the wine is remarkably degraded, so consumers may discard the wine without resealing or storing the wine. Some wine bottle caps used to reseal the wine bottle may remove oxygen contained in the wine bottle by using a manual pump or an automatic pump. According to the experimental result, when these wine bottle caps are employed, oxygen remains in the wine bottle with atmospheric concentration of 8.4%, so the oxidation of the wine may be slightly delayed. However, volatile materials may be easily evaporated (boiled) due to low pressure.

In more detail, according to the experimental result, the amount of oxygen required to oxidize 100ml of wine is about 6ml. That is, 6% of oxygen is required based on 100ml of air. Therefore, although the oxidation of the wine can be delayed when the oxygen remains in the wine bottle at the amount of about 8% through the operation of a vacuum pump, it may not fundamentally prevent the oxidation of the wine, but accelerate loss of perfume/alcohol.

According to the experimental result, when the wine and air are provided in the wine bottle in the volume ratio of 1:1, about 1.2 to 1.5% of oxygen is used to oxidize the wine in 3 hours. In addition, about 2.5 to 3% of oxygen is used to oxidize the wine in 5 hours and about 5.4 to 6% of oxygen is used to oxidize the wine in 96 hours when the total amount of oxygen is 21%. That is, the initial oxidation rate is very important. Since the wine has higher reducing potential, the wine storage capability may depend on the capability for initially removing the oxygen.

Recently, a patch-type oxygen absorbent is utilized to restrain rancidity of the wine when the wine bottle is resealed. However, an oxygen absorbent capable of efficiently removing oxygen in the initial stage has not yet been developed. In addition, even if such an oxygen absorbent is developed, it is necessary to precisely place the oxygen absorbent at the desired position in the wine bottle.

[Disclosure]

[Technical Problem]

Recently, a cap having a patch-type oxygen absorbent fixed in the cap or fixed to an upper/lower end of the cap has been proposed. In this case, oxygen heavier than nitrogen sinks downward in a wine bottle. However, since the patch-type oxygen absorbent is placed in the cap provided at an upper end of the wine bottle, the patch-type oxygen absorbent may not effectively absorb the oxygen.

In addition, wine storage boxes are designed such that wine bottles are lying down in the wine storage boxes to prevent oxygen permeation by allowing a cork cap to come into contact with the wine. However, as mentioned above, if the wine bottle, which is resealed by a cork cap having an oxygen absorbent, is lying down in the wine storage box, the oxygen absorbent may sink into the wine, so that the oxygen absorbent does not come into contact with air.

Another problem is that the equipment and method suitable for preparing the patch-type oxygen absorbent having the superior oxygen removal efficiency have not yet been developed.

In general, the patch-type oxygen absorbent is packaged together with foods to prevent propagation of microorganisms and oxidation of the foods. In addition, the oxygen absorbent used for the foods includes a reducing agent (metals, such as iron, or organic oxide) as a main reactant and additionally includes an electrolyte that supports electron migration, water for dissolving the electrolyte, and various moisture donors to allow the oxygen absorbent to absorb a predetermined amount of water. The oxygen absorbent is prepared in the form of a patch.

In addition, as a principal component, the oxygen absorbent may include iron powder having an oxygen absorbing function, such as pure iron powder, cast iron powder, steel powder, reduced iron powder, spray iron powder, sponge iron powder, electrolytic iron powder, and the like, without limitation.

Further, the oxygen absorbent may include an electrolyte as an electron mediator for the oxidation and reduction reaction. Such an electrolyte may include a halogenated product of alkaline metal or alkaline earth metal, a halogenated product of ion-exchange resin, hydrochloric acid, hypochlorite, and the like.

The halogenated product of alkaline metal or alkaline earth metal, such as NaCl, $CaCl_2$, and $MgCl_2$, is preferable

in terms of acceleration of the oxidation-reduction reaction, stability, and hygienics.

In order to add the electrolyte, an oxidation process accelerator prepared in the form of pure halide or an aqueous solution is mixed with the oxygen absorbent. Preferably, prooxidant is added to a moisture donor and iron powder, respectively.

Among oxygen absorbents, an oxygen absorbent employing a metallic reducing agent (principal material of the oxygen absorbent) may be classified into two types according to the composition of contents thereof.

One is a moisture-dependent oxygen absorbent which is used for foods having sufficient moisture so that metallic materials can be naturally oxidized. The other is a self-reactive oxygen absorbent used for dried foods having insufficient moisture, in which a moisture donor and an electrolyte dissolved in water are mixed with metallic materials in a patch so that oxygen can react with a metallic reducing agent under any circumstances.

Although the moisture-dependent oxygen absorbent starts reaction more slowly than the self-reactive oxygen absorbent, the moisture-dependent oxygen absorbent is economical in terms of price.

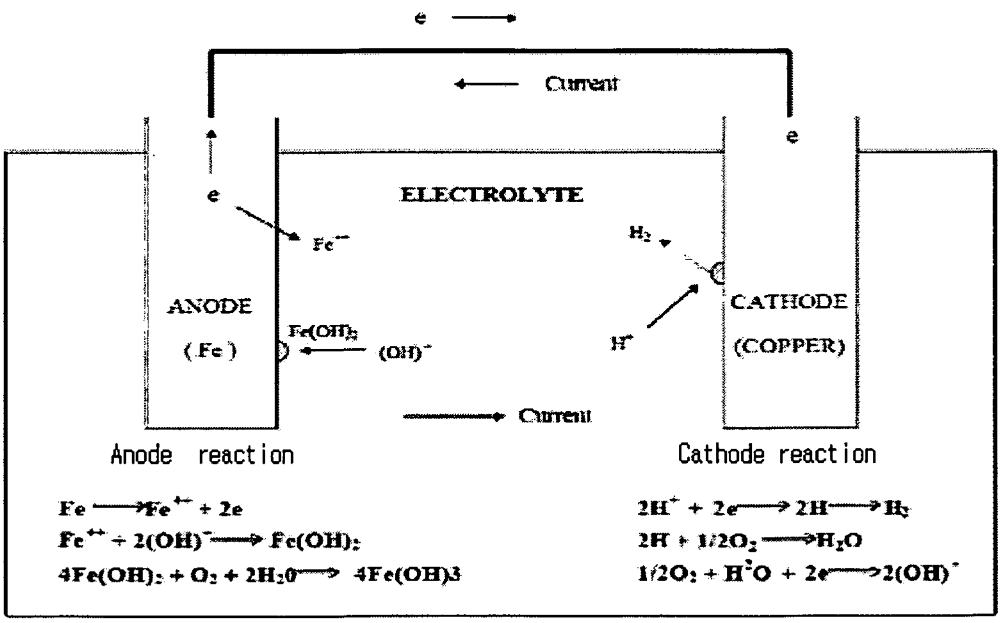


<oxidation-reduction chain reaction of Fe-Cu (cell reaction)>

As shown in the above figure, the oxidation-reduction reaction using activated carbon and Fe, in which Fe serves as an anode and Cu serves as a cathode (Cu can be replaced with activated carbon and serve as a non-reactive catalyst), is identical to the cell reaction caused by potential difference between two electrodes.

During the reaction, oxygen is involved in the reaction for Fe serving as the anode, thereby producing $Fe(OH)_3$. Extra electrons of the anode are transferred to the cathode (activated carbon or Cu) to produce H and OH-, and OH- reduces Fe ions on a surface of the anode, thereby producing $Fe(OH)_2$ reactable with H and water. Since the chain reaction is carried out until the reactant is completely removed from the anode and the cathode, the higher reaction rate can be achieved. The cell reaction occurs when Fe and activated carbon are connected to each other by water (circuit connection). However, the oxygen absorbent prepared through the conventional process does not satisfy the Fe-water condition. Details thereof will be described below.

A moisture donor and water are input into a tub in a predetermined ratio and then uniformly stirred to increase the moisture content of the moisture donor. The moisture donor stirred with the water has the critical moisture content. A machine for preparing the oxygen absorbent inputs the contents of the oxygen absorbent into a film and then seals the film by falling down the contents using gravity. At this time, the contents of the oxygen absorbent must have fluidity just like dried sand such that a predetermined amount of contents can be precisely input into the film without sticking to the machine. In order to satisfy this fluidity, components of the oxygen absorbent must have little moisture on surfaces thereof in such a manner that the particles may not stick to each other (which is referred to as critical moisture content). In order to ensure the fluidity, the circuit connection of Fe-moisture-activated carbon, which is required for the fast cell reaction, must be abandoned.

In more detail, as shown in FIG. 1, an apparatus 1 for preparing oxygen absorbent according to the related art is a T-sealing apparatus including an input port 1a, a film guider 1b, a thermal belt 1c, and a sealer 1d.

As contents are input into the input port 1a, both sides of a film 1e are overlapped with each other through the film guider 1b while surrounding the input port 1a. Then, the film 1e moves down through the thermal belt 1c. At this time, the overlap part of the film 1e is thermally bonded by the thermal belt 1c. After that, the sealer 1d packages the film 1e having the cylindrical shape through the thermal bonding, thereby forming an oxygen absorbent 1f.

The longitudinal size of the oxygen absorbent 1f is determined based on the driving speed of the thermal belt 1c and the sealer 1d, and the transverse size of the oxygen absorbent 1f is determined based on the size of the input port 1a. The oxygen absorbent 1f is prepared in the form of a patch.

FIG. 2 is a view showing a method of preparing the oxygen absorbent using the apparatus 1 according to the related art. As shown in FIG. 2, the oxygen absorbent 1f is prepared by stirring activated carbon, an electrolyte and water, which are input into the input port 1a, and then inputting Fe into the mixture. However, the conventional method requires the fluidity of components in order to improve the quality of the product. In addition, water must previously sink into the activated carbon and the fluidity may be lowered depending on the moisture content of the activated carbon.

[Technical Solution]

The present invention has been made to solve the above problems occurring in the prior art, and an object of the present invention is to provide a wine bottle cap assembly and manufacturing method and apparatus thereof, capable of effectively removing oxygen contained in a wine bottle when the wine bottle is resealed.

To accomplish the above object the present invention provides a wine bottle cap assembly comprising: a cap body including an insertion part inserted into an inlet of a wine bottle to seal the inlet of the wine bottle; an oxygen absorbent for absorbing oxygen in the wine bottle; and a fixing device for detachably fixing the oxygen absorbent below the insertion part in the wine bottle such that the oxygen absorbent is spaced apart from the insertion part by a predetermined distance.

The fixing device fixes the oxygen absorbent such that the oxygen absorbent is movable in the wine bottle.

The fixing device includes a fixture integrally formed with the insertion part and prepared in the form of a hook, and a fixing hole formed in the oxygen absorbent such that the fixture is inserted into the fixing hole.

The fixture has elasticity and the fixing device includes a locking slot formed in the insertion part such that a tip of the fixture is locked with the locking slot.

The fixture is provided at a lower end thereof with a support protrusion to prevent the oxygen absorbent from being separated from the fixture.

The fixing device includes a fixture integrally formed with the insertion part and formed with a coupling hole, a fixing hole formed in the oxygen absorbent, and a coupling member coupled into the coupling hole by passing through the fixing hole to fix the oxygen absorbent to the fixture.

The oxygen absorbent includes contents and a breathable wrapper receiving the contents therein and including a material having air-permeable and waterproof properties, and the contents include oxygen absorbing components and buoyant components having specific gravity lighter than that of water to allow the oxygen absorbent to float on wine.

The oxygen absorbent includes buoyant components such as expandable synthetic resin or activated carbon.

The oxygen absorbent includes contents having oxygen absorbing components, a breathable wrapper receiving the contents therein and including a material having air-permeable and waterproof properties, and a buoyant member coupled to an outer surface of the breathable wrapper and including buoyant components having specific gravity lighter than that of water to allow the oxygen absorbent to float on wine.

The fixing device includes a fixture integrally formed with the insertion part and prepared in the form of a hook, and a connection member prepared in the form of a string having a predetermined length to connect the fixture to the oxygen absorbent.

The fixing device includes a connection member prepared in the form of a string having a predetermined length, one end of the connection member is fixed to the oxygen absorbent, and an opposite end of the connection member is fixedly secured between the cap body and the inlet of the wine bottle.

The fixing device is prepared in the form of a nipper connected to the cap body to pick up one side of the oxygen absorbent.

The oxygen absorbent includes a breathable wrapper and contents inserted into the breathable wrapper, and the contents include Fe, a moisture donor and a water pocket containing an electrolyte solution obtained by mixing an electrolyte with water.

The water pocket includes a waterproof film or a gelatin capsule.

The oxygen absorbent includes a breathable wrapper and contents inserted into the breathable wrapper, and the contents include Fe, a moisture donor, and an electrolyte solution directly transferred into the breathable wrapper.

The moisture donor includes at least one or two selected from the group consisting of activated carbon, natural

zeolite, synthetic zeolite, silica gel, activated clay, activated aluminum oxide, clay, diatomaceous earth, kaolin, talc, bentonite, sepiolite, attapulgite, magnesium oxide, iron oxide, aluminum hydroxide, magnesium hydroxide, iron hydroxide, magnesium silicate, aluminum silicate, synthetic hydrotalcite, and amine-loaded porous silica.

A ratio of the moisture donor to powdered Fe is 0.3 to 1:1.

A particle size of the moisture donor is 8 to 50 meshes.

A ratio of the electrolyte solution to powdered Fe is 0.2 to 1:1.

The electrolyte of the electrolyte solution has concentration of 0.1M to 2M (molarity).

The oxygen absorbent is secondarily wrapped by a secondary wrapper including a material having higher oxygen barrier property until the oxygen absorbent is fixed to the fixing device.

The secondary wrapper has oxygen permeability equal to or less than 10 cc.mil/100in$^2$xdayxatm.

The secondary wrapper has vapor permeability equal to or less than 0.8 WVTR (38°C and 95 vs 0% RH).

According to another aspect of the present invention, there is provided a method of manufacturing a wine bottle cap assembly. The method includes the step of preparing an oxygen absorbent to manufacture the wine bottle cap assembly including a cap body having an insertion part inserted into an inlet of a wine bottle to seal the inlet of the wine bottle, the oxygen absorbent for absorbing oxygen in the wine bottle and a fixing device for detachably fixing the oxygen absorbent below the insertion part in the wine bottle such that the oxygen absorbent is spaced apart from the insertion part by a predetermined distance, wherein the step of preparing the oxygen absorbent includes the steps of inserting Fe and a moisture donor into a breathable wrapper, and separately inserting an electrolyte solution obtained by mixing an electrolyte with liquid into the breathable wrapper.

The electrolyte solution is inserted into the breathable wrapper at a constant speed and a constant time interval by a control valve.

According to still another aspect of the present invention, there is provided a method of manufacturing a wine bottle cap assembly. The method includes the step of preparing an oxygen absorbent to manufacture the wine bottle cap assembly including a cap body having an insertion part inserted into an inlet of a wine bottle to seal the inlet of the wine bottle, the oxygen absorbent for absorbing oxygen in the wine bottle and a fixing device for detachably fixing the oxygen absorbent below the insertion part in the wine bottle such that the oxygen absorbent is spaced apart from the insertion part by a predetermined distance, wherein the step of preparing the oxygen absorbent includes the steps of forming a water pocket by inserting an electrolyte solution obtained by mixing an electrolyte with liquid into a wrapper having a waterproof function, inserting Fe and a moisture donor into a breathable wrapper, and inserting the water pocket into the breathable wrapper by free-falling the water pocket.

According to still another aspect of the present invention, there is provided an apparatus for manufacturing a wine bottle cap assembly. The apparatus includes a device for preparing an oxygen absorbent to manufacture the wine bottle cap assembly including a cap body having an insertion part inserted into an inlet of a wine bottle to seal the inlet of the wine bottle, the oxygen absorbent for absorbing oxygen in the wine bottle and a fixing device for detachably fixing the oxygen absorbent below the insertion part in the wine bottle such that the oxygen absorbent is spaced apart from the insertion part by a predetermined distance, wherein the oxygen absorbent includes a breathable wrapper and contents inserted into the breathable wrapper, the contents include Fe, a moisture donor and an electrolyte solution directly transferred to the breathable wrapper, the device for preparing the oxygen absorbent includes: an input port for receiving materials; a sealer for sealing one open side of the breathable wrapper; and a pipe for transmitting the electrolyte solution, and an end of the pipe is located adjacent to the sealer.

The device for preparing the oxygen absorbent further includes a control valve for supplying the electrolyte solution at a constant speed and a constant time interval.

[Advantageous Effects]

As described above, according to the wine bottle cap assembly of the present invention, when the resealed wine bottle is stored standing upright, the oxygen absorbent is located below the cap body while being spaced apart from the cap body by a predetermined distance, so oxygen, which is heavier than nitrogen and sinking downward, can be rapidly removed. In addition, when the wine bottle is stored lying down, the oxygen absorbent does not sink into the wine, so oxygen absorption can be efficiently performed and the wine bottle can be securely sealed.

In addition, according to the wine bottle cap assembly of the present invention, the oxygen absorbent can be easily exchanged with new one so that the wine bottle cap assembly can be effectively utilized when the resealed wine bottle is stored for a long period of time.

According to the method of preparing the oxygen absorbent, the amount of carriers having the critical moisture content can be reduced. In addition, since the stirring process for the carrier and the electrolyte solution can be omitted, the prime cost can be saved and friction loss of the carrier occurring in the stirring process can be reduced. Further, the electrolyte is directly transferred to Fe, so the initial reaction rate may be higher than that of the related art by 3 to 5 times.

In addition, the oxygen absorbent prepared according to the method of the present invention is resealed by a

secondary wrapper having low oxygen and moisture permeability in such a manner that a user can remove (absorb) oxygen at a desired time by opening the secondary wrapper.

Meanwhile, according to the method of preparing the oxygen absorbent of the present invention, a water pocket having the electrolyte dissolved in a predetermined concentration is prepared and the water pocket is packaged in the patch together with the powdered Fe and moisture donor, so that the amount of the moisture donor can be saved and the higher reaction rate can be realized. In addition, the oxygen absorbent prepared according to the method of the present invention is resealed by an inexpensive secondary wrapper having low moisture permeability in such a manner that oxygen can be absorbed at a desired time by bursting the water pocket.

In addition, since the stirring process for the moisture donor can be omitted, friction loss occurring in the stirring process can be prevented.

[Description of Drawings]

FIG. 1 is a perspective view showing the structure of an apparatus for preparing an oxygen absorbent according to the related art;

FIG. 2 is a perspective view for explaining a method of preparing an oxygen absorbent by using an apparatus for preparing the oxygen absorbent according to the related art;

FIG. 3 is a side view showing the structure of a cap body integrally formed with a fixture in a wine bottle cap assembly according to the first embodiment of the present invention;

FIG. 4 is a side view showing the structure of an oxygen absorbent in a wine bottle cap assembly according to the first embodiment of the present invention;

FIG. 5 is a side view showing the structure of a wine bottle cap assembly according to the first embodiment of the present invention, in which an oxygen absorbent is fixed to the cap body by a fixing device;

FIG. 6 is a view showing a wine bottle standing upright and resealed by a wine bottle cap assembly according to the first embodiment of the present invention;

FIG. 7 is a view showing a wine bottle lying down and resealed by a wine bottle cap assembly according to the first embodiment of the present invention;

FIG. 8 is an exploded perspective view showing a wine bottle cap assembly according to the second embodiment of the present invention;

FIG. 9 is a side view showing the structure of a wine bottle cap assembly according to the second embodiment of the present invention, in which an oxygen absorbent is fixed to the cap body by a fixing device;

FIG. 10 is a view showing a wine bottle standing upright and resealed by a wine bottle cap assembly according to the second embodiment of the present invention;

FIG. 11 is a view showing a wine bottle lying down and resealed by a wine bottle cap assembly according to the second embodiment of the present invention;

FIG. 12 is a view showing a wine bottle lying down and inclined downward in a state in which the wine bottle is resealed by a wine bottle cap assembly according to the third embodiment of the present invention;

FIG. 13 is a view showing a wine bottle lying down and inclined downward in a state in which the wine bottle resealed by a wine bottle cap assembly according to the fourth embodiment of the present invention;

FIG. 14 is a side view showing the structure of a wine bottle cap assembly according to the fifth embodiment of the present invention, in which an oxygen absorbent is fixed to the cap body by a fixing device;

FIG. 15 is a side view showing the structure of a wine bottle cap assembly according to the sixth embodiment of the present invention, in which an oxygen absorbent is fixed to the cap body by a fixing device;

FIG. 16 is a view showing the structure of an oxygen absorbent according to the second embodiment of the present invention;

FIG. 17 is a view showing the structure of an oxygen absorbent according to the third embodiment of the present invention;

FIG. 18 is a perspective view showing an apparatus and a method for preparing an oxygen absorbent according to the first embodiment of the present invention;

FIG. 19 is a perspective view showing an apparatus and a method for preparing an oxygen absorbent according to the second embodiment of the present invention; and

FIG. 20 is a view showing the structure of an oxygen absorbent wrapped with a secondary wrapper according to the embodiment of the present invention.

[Best Mode]

Hereinafter, the structure of a wine bottle cap assembly according to the first embodiment of the present invention will be described in detail with reference to accompanying drawings.

As shown in FIGS. 3 to 5, the wine bottle cap assembly 100A according to the first embodiment of the present invention is used for resealing a wine bottle a and includes a cap body 10A for sealing an inlet b of the wine bottle a.

The cap body 10A is prepared by using synthetic resin, such as polyethylene having flexibility and light weight similar to those of cork. An expansion agent is added to the polyethylene such that the polyethylene may have solidity higher than that of the cork. In addition, the cap body 10A can be prepared by using a metal coated with chrome to improve the aesthetic appearance of the cap body 10A.

The cap body 10A includes an insertion part 11 inserted into the inlet b of the wine bottle a to seal the inlet b of the wine bottle a, and an exposure part 12 exposed to the outside when the insertion part 11 is inserted into the inlet b of the wine bottle a.

The insertion part 11 has a circular sectional shape corresponding to the shape of the inlet b of the wine bottle a. A plurality of sealing rims 11a having flexibility similar to that of rubber or silicon are provided around the insertion part 11 while being spaced apart from each other to enhance sealing force of the insertion part 11.

In addition to the cap body 10A, the wine bottle cap assembly 100A according to the first embodiment of the present invention further includes an oxygen absorbent 20A for absorbing oxygen in the wine bottle a and a fixing device 30A for detachably fixing the oxygen absorbent 20A below the insertion part 11 in the wine bottle a in such a manner that the oxygen absorbent 20A is spaced apart from the insertion part 11 by a predetermined distance.

Thus, when the wine bottle a is stored standing upright, the oxygen absorbent 20A is located below the cap body 10A, so the oxygen absorbent 20A can rapidly absorb and remove oxygen which is heavier than nitrogen and sinking downward in the wine bottle a.

Since the oxygen absorbent 20A is detachably fixed by the fixing device 30A, a user may easily exchange the oxygen absorbent 20A with a new oxygen absorbent as the efficiency of the oxygen absorbent 20A is degraded due to the long-time storage of wine w in the resealed wine bottle.

In more detail, the fixing device 30A includes a fixture 31 integrally formed with a lower end of the insertion part 11 and prepared in the form of a hook, and a fixing hole 20a formed at one end of the oxygen absorbent 20A such that the fixture 31 can be inserted into the fixing hole 20a.

The fixture 21 includes a first extension part 31a extending in the insertion direction of the insertion part 11 from the center of the lower end of the insertion part 11, and a second extension part 31b extending upward from a lower end of the first extension part 31a toward the lower end of the insertion part 11 while forming a predetermined angle with respect to the first extension part 31a. A tip of the second extension part 31b is sharpened so that the second extension part 31b can be easily inserted into the fixing hole 20a.

The fixture 31 has elasticity so that the first and second extension parts 31a and 31b can be elastically compressed and expanded against each other. In order to stably fix the oxygen absorbent 20A, a locking slot 11b is formed at one side of the lower end of the insertion part 11 corresponding to the tip of the second extension part 31b such that the tip of the second extension part 31b can be locked with the locking slot 11b.

Thus, if the tip of the second extension part 31b is fixed to the locking slot 11b in a state in which the second extension part 31b of the fixture 31 is inserted into the fixing hole 20a of the oxygen absorbent 20A, as shown in FIG. 4, the oxygen absorbent 20A can be securely fixed to the cap body 10 and easily detachable from the cap body 10.

FIG. 6 shows the wine bottle, in which the lower portion of the insertion part 11 of the wine bottle cap assembly 100A is inserted into the inlet b of the wine bottle a to reseal the inlet b of the wine bottle a. In the state shown in FIG. 6, the oxygen absorbent 20A is located below the insertion part 11 by the fixing device 30A while being distanced from the insertion part 11, so the oxygen absorbent 20A can rapidly absorb oxygen sinking downward in the wine bottle a.

In addition, the user can easily exchange the oxygen absorbent 20A with a new oxygen absorbent by unlocking the fixture 31 from the locking slot 11b after pulling the cap body 10A out of the inlet b of the wine bottle a, so the exchange work for the oxygen absorbent 20A is facilitated and the wine bottle cap assembly 100A can be effectively utilized when the resealed wine bottle is stored for a long period of time.

Typical wine storage boxes are designed such that wine bottles are lying down in the wine storage boxes to prevent oxygen permeation by allowing a cork cap to come into contact with the wine, and the oxygen absorbent 20A includes metallic components having specific gravity heavier than that of water. Thus, if the wine bottle a resealed as shown in FIG. 6 is stored lying down in the wine storage box, the oxygen absorbent 20A sinks into the wine w, so that the oxygen absorption function of the oxygen absorbent 20A may be deteriorated.

In order to solve the above problem, the oxygen absorbent 20A according to the present invention includes contents having oxygen absorbing components and a breathable wrapper 22 receiving the contents therein and including a flexible porous film having the air-tightness and waterproof properties. The contents include buoyant components having specific gravity lighter than that of water to allow the breathable wrapper 22 to float on the wine w. The buoyant

components can be prepared through expandable synthetic resin, such as expandable polystyrene, or activated carbon having density lower than that of water.

Therefore, even if the wine bottle a resealed by the wine bottle cap assembly 100A according to the embodiment of the present invention is stored lying down as shown in FIG. 7, the breathable wrapper 22 having the waterproof function may not sink into the wine w, but float on the wine w, so that the oxygen absorption can be rapidly and effectively performed.

In addition, since the oxygen absorbent 20A coupled with the fixture 31 through the fixing hole 20a may flow in the wine bottle a along the first and second extension parts 31a and 31b, buoyancy may be imposed on the oxygen absorbent 20A, so that the oxygen absorbent 20A may float on the wine w.

The oxygen absorbent 20A performs the oxygen absorption as the oxygen absorbent 20A is exposed to the atmosphere, so the oxygen absorbent 20A must be shielded from air such that the oxygen absorption may not proceed before use. To this end, the oxygen absorbent 20A is preferably wrapped by a secondary wrapper 500 including aluminum/EVOH (ethylene vinylalcohol copolymer)/nylon having air-tightness property when it is circulated.

Reference numeral 22a represents a sealing part for sealing contents contained in the breathable wrapper 22. The sealing part 22a can be prepared in the form of a three-way sealing, a four-way sealing or a T-sealing.

Meanwhile, FIGS. 8 to 11 show a wine bottle cap assembly 100B according to the second embodiment of the present invention.

As shown in FIGS. 8 and 9, the wine bottle cap assembly 100B according to the second embodiment of the present invention includes a cap body 10B, a fixing device 30B and an oxygen absorbent 20A.

In more detail, the cap body 10B according to the second embodiment of the present invention is a lever type cap body which can be easily open/closed.

That is, the cap body 10B includes a cover 13 in the form of a turnover container suitable for covering an outer portion of the inlet b of the wine bottle a, and an insertion part 11' inserted into the inlet b of the wine bottle a. In addition, the fixing device 30B includes a fixture 31' in the form of a shaft extending by passing through the cover 13 and the insertion part 11'.

A lever 14, which is selectively standing upright or lying down, is fixed to the fixture 31' by a pin 15 at the upper portion of the cover 13, and a support protrusion 31c is formed on the fixture 31' below the insertion part 11' such that a lower end of the insertion part 11' is supported by the locking protrusion 31c. The insertion part 11' includes a plurality of spacers 11a' made from rigid materials and sealing members 11b' interposed between the spacers 11a' and between the lower spacer 11a' and the support protrusion 31a. The sealing members 11b' have flexibility similar to that of rubber or silicon and are made from sealing materials. The outer diameter of the spacer 11a' and the sealing member 11b' is slightly smaller than the inner diameter of the inlet b of the wine bottle a. Reference numeral 31 e represents a coupling hole into which the pin 15 is inserted.

Therefore, when the lever 14 is standing upright as shown in FIG. 10, the support protrusion 31c is urged toward the inlet b of the wine bottle a and the outer diameter of the sealing member 11b' is expanded so that the inlet b of the wine bottle a is sealed by the sealing member 11b'. In this state, if the lever 14 is lying down as shown in FIG. 9, the sealing member 11b' returns to its initial position so that the inlet b of the wine bottle a is open.

In addition, a coupling hole 31d is formed in the fixture 31' below the support protrusion 31c. The fixing device 30B further includes a coupling member 32, which is screw-coupled into the coupling hole 31d by passing through the fixing hole 20a of the oxygen absorbent 20A to fix the oxygen absorbent 20A to the fixture 31'.

The coupling member 32 includes a coupling part 32a provided at one end of the coupling member 32 and formed with a screw so as to be screw-coupled into the coupling hole 31 d, a head part 32b provided at the other end of the coupling member 32, and a connection part 32c interposed between the coupling part 32a and the head part 32b to connect the coupling part 32a with the head part 32b. The connection part 32c is not formed with a screw and has a predetermined length to guide the oxygen absorbent 20A in the wine bottle a.

Therefore, when the wine bottle a resealed by the wine bottle cap assembly 100B according to the second embodiment of the present invention is stored standing upright as shown in FIG. 10, the oxygen absorbent 20A is located below the insertion part 11' of the cap body 10B while being distanced from the insertion part 11', so that the oxygen absorbent 20A may rapidly absorb oxygen at the lower portion of the wine bottle a. In addition, when the wine bottle a is lying down as shown in FIG. 11, the oxygen absorbent 20A may float on the wine w, so that the oxygen absorption may be effectively performed.

In the case that the resealed wine bottle a is stored lying down and inclined downward, the wine bottle cap assemblies 100A and 100B according to the first and second embodiments may not easily remove the oxygen in the wine bottle a.

For this reason, as shown in FIG. 12, a wine bottle cap assembly 100C according to the third embodiment of the present invention includes not only the cap body 10A and the fixture 31 according to the first embodiment, but also a connection member 34 which is prepared in the form of a string having a predetermined length to connect the fixture 31 to the oxygen absorbent 20A. The fixture 31 and the connection member 34 may constitute the fixing device 30C.

The oxygen absorbent 20A can move more freely due to the connection member 34 having the predetermined length, so that the wine bottle cap assembly 100C can easily remove the oxygen from the wine bottle a, which is lying down and inclined downward.

FIG. 13 shows a wine bottle cap assembly 100D according to the fourth embodiment of the present invention similar to the wine bottle cap assembly 100C shown in FIG. 12. The wine bottle cap assembly 100D according to the fourth embodiment of the present invention includes a cap body 10C where the fixture 31 according to the first embodiment is omitted and a fixing device 30D including a connection member 35 prepared in the form of a string having a predetermined length. One end of the connection member 35 is fixed to the oxygen absorbent 20A and the other end of the connection member 35 is fixedly secured between the cap body 10C and the inlet b of the wine bottle a. Reference numeral 36 is a handle connected to an end of the connection member 35 withdrawn out of the wine bottle a.

The wine bottle cap assembly 100D according to the fourth embodiment of the present invention can remarkably simplify the structure of the fixing device 30D and can easily remove the oxygen from the wine bottle a, which is lying down and inclined downward.

FIGS. 14 and 15 show wine bottle cap assemblies 100E and 100F according to the fifth and sixth embodiments of the present invention, respectively. The wine bottle cap assemblies 100E and 100F are identical to the wine bottle cap assembly 100B according to the second embodiment of the present invention except for the lower structure of the support protrusions 31c of fixtures 31" and 31"'. That is, in the case of the wine bottle cap assembly 100E according to the fifth embodiment of the present invention, a hook 37 is integrally formed below the support protrusion 31c of the fixture 31". In addition, in the case of the wine bottle cap assembly 100F according to the sixth embodiment of the present invention, a nipper 38 is integrally formed below the support protrusion 31c of the fixture 31" to securely pick up one side of the oxygen absorbent 20A. A locking protrusion 37a is provided at the tip of the hook 37 to prevent the oxygen absorbent 20A from being separated from the hook 37. Therefore, the wine bottle cap assemblies 100E and 100F according to the fifth and sixth embodiments of the present invention can be assembled with the wine bottle in the same way as the wine bottle cap assembly 100B according to the second embodiment of the present invention and can simply fix the oxygen absorbent 20A.

Meanwhile, FIGS. 16 and 17 show the structure of oxygen absorbents 20B and 20C according to the second and third embodiments of the present invention, respectively. The oxygen absorbents 20B and 20C according to the second and third embodiments of the present invention include contents (not shown) having oxygen absorbing components (not shown), breathable wrappers 22 receiving the contents and having the air permeable and waterproof properties, and buoyant members 23 and 25 coupled to outer surfaces of the breathable wrappers 22 such that the oxygen absorbents 20B and 20C may float on the wine, respectively.

That is, according to the oxygen absorbents 20B and 20C of the second and third embodiments, the contents may not include buoyant components, but the oxygen absorbents 20B and 20C can float on the wine due to the buoyant members 23 and 25 coupled to the outer surfaces of the breathable wrappers 22. The buoyant members 23 and 25 may include expandable polystyrene or activated carbon having specific gravity lower than that of water.

The buoyant member 23 of the oxygen absorbent 20B according to the second embodiment may be divided into an upper body 23a and a lower body 23b. The upper body 23a is coupled with the lower body 23b while interposing a sealing part 22a of the breathable wrapper 22 therebetween. Reference numeral 26 represents fastening parts which are integrally formed with the upper and lower bodies 23a and 23b and fixed to opposite bodies by passing through the sealing part 22a.

In addition, the buoyant member 25 of the oxygen absorbent 20C according to the third embodiment may be divided into an upper body 25a and a lower body 25b which are integrally formed with each other. The upper body 25a is rotatably coupled with the lower body 25b by a connection part 25c. The coupling scheme for the buoyant member 25 is identical to that of the second embodiment.

The wine bottle cap assembly having the above structure according to the present invention can be manufactured by preparing the cap body, the oxygen absorbent and the fixing device and then assembling them with each other. Thus, the method of manufacturing the wine bottle cap assembly having the above structure according to the present invention may include a step of preparing the oxygen absorbent and the apparatus for manufacturing the wine bottle cap assembly according to the present invention may include an apparatus for preparing the oxygen absorbent.

Hereinafter, the method of preparing the oxygen absorbent and the structure, function and effect of the apparatus for preparing the oxygen absorbent according to the present invention will be described in detail.

FIG. 18 shows the apparatus and method for preparing the oxygen absorbent according to the first embodiment of the present invention. As shown in FIG. 18, the apparatus 200A for preparing the oxygen absorbent according to the first embodiment of the present invention is a T-sealing apparatus including an input port 210, a film guider 220, a thermal belt 230 and a sealer 240.

As contents are input into the input port 210, both sides of a film 300 for forming the breathable wrapper 22 are overlapped with each other through the film guider 220 while surrounding the input port 210. Then, the thermal belt 230 thermally bonds the overlap part of the film 300 while moving the film 300 downward. After that, the sealer 240

packages the film 300 having the cylindrical shape through the thermal bonding, thereby forming the oxygen absorbent 20D.

The longitudinal size of the oxygen absorbent 20D is determined based on the driving speed of the thermal belt 230 and the sealer 240, and the transverse size of the oxygen absorbent 20D is determined based on the size of the input port 210. The oxygen absorbent 20D is prepared in the form of a patch.

In order to package the contents of the oxygen absorbent 20D by a predetermined amount, individual input ports can be provided at an upper portion of the input port 210 to determine the amount of input of each component. For instance, in order to input water, a pipe 150 extends into the input port 210 from the outside such that an end of the pipe 150 is adjacent to the sealer 240, thereby supplying water through the pipe 150 while ensuring fluidity of other contents. In addition, water can be continuously supplied through the pipe 150 at a constant speed according to the speed of the sealer 240 and the thermal belt 230 or a predetermined amount of water can be supplied at a predetermined time interval through a control valve (not shown).

FIG. 19 shows the apparatus 200B and method for preparing the oxygen absorbent according to the second embodiment of the present invention.

According to the second embodiment of the present invention, an electrolyte solution obtained by mixing an electrolyte with water is contained in a separate water pocket 400 and the water pocket 400 is input into the breathable wrapper 22. In addition, the apparatus 200B for preparing the oxygen absorbent includes a water pocket forming device 260 to form the water pocket 400 containing the electrolyte solution without the pipe 150. The water pocket 400 can be prepared by using a waterproof film or a gelatin capsule.

The water pocket forming device 260 manufactures the water pocket 400 through the manufacturing process substantially identical to that of the apparatus for preparing the oxygen absorbent according to the related art. As shown in FIG. 19, the water pocket 400 manufactured by the water pocket forming device 260 is individually input into the inner peripheral portion of the oxygen absorbent 20E. In this case, the water pocket 400 can be located at a predetermined position in the oxygen absorbent 20E if the water pocket 400 is input later than Fe and activated carbon.

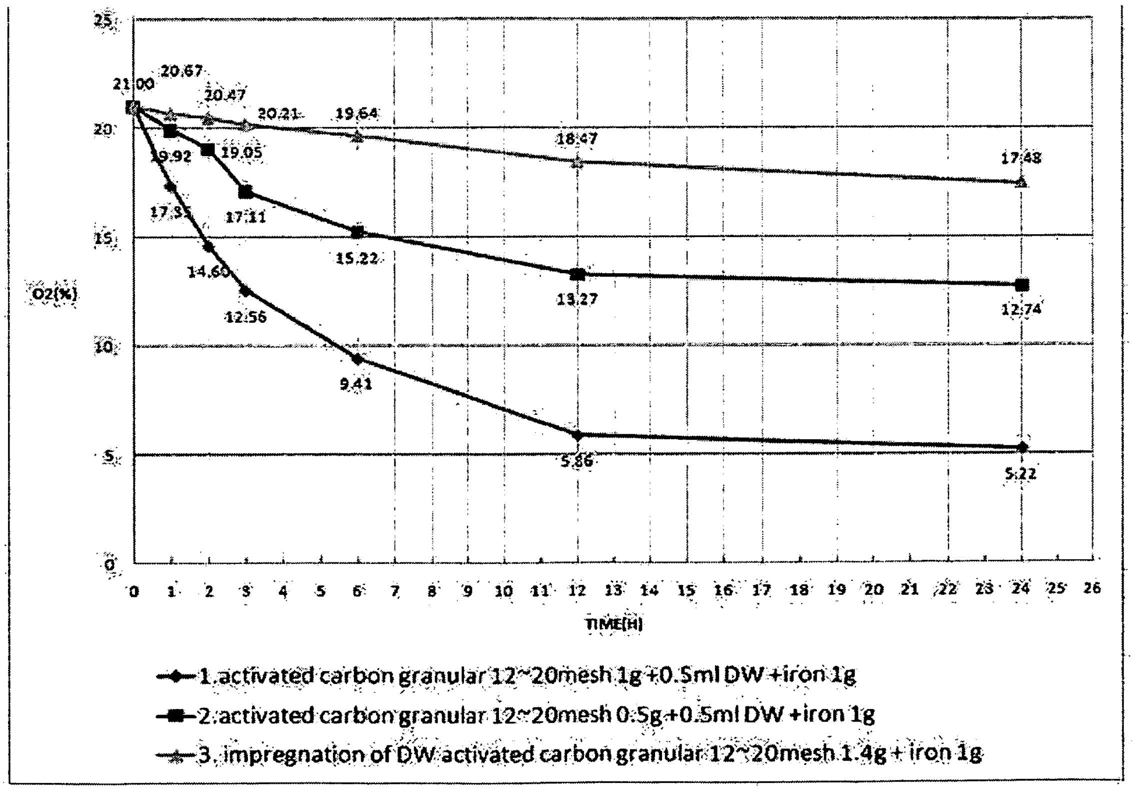


<Graph 1: reaction rate of moisture spray type oxygen absorbent and carrier type oxygen absorbent without electrolyte>

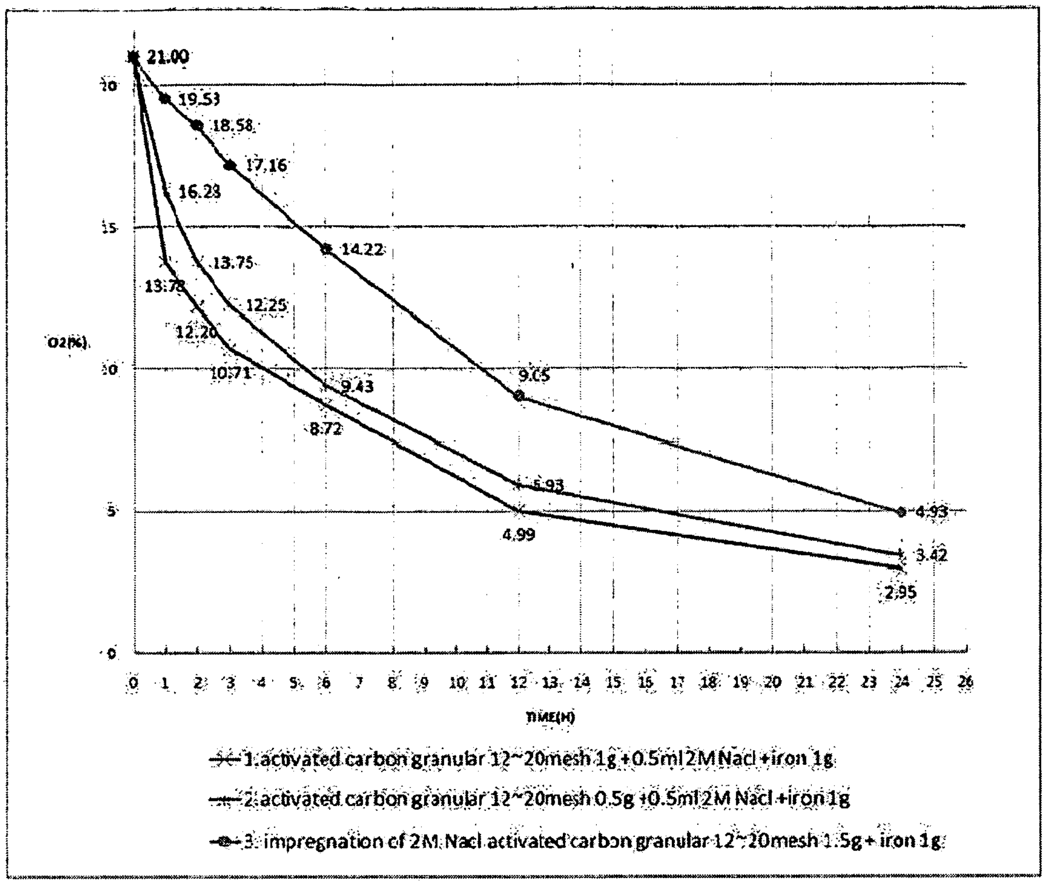


<Graph 2: reaction rate of moisture spray type oxygen absorbent and carrier type oxygen absorbent including electrolyte of 2M NaCl 0.5ml>

The above graphs 1 and 2 were obtained by performing experiments three times using the gas chromatograph to measure the oxygen absorbent sealed with a film having a size of 15x60mm. The moisture spray type oxygen absorbent indicates the oxygen absorbent prepared according to the first embodiment of the present invention, and the carrier type oxygen absorbent indicates the oxygen absorbent according to the related art.

In more detail, in order to measure the concentration of remaining oxygen, a breathable oxygen absorbent patch having a size of 25x60mm was prepared in a closed branch-type container having a volume of 300ml, and variation of the oxygen concentration in the closed branch-type container was observed (such observation was performed three times while varying conditions and the average value was displayed under the tolerance less than 0.5%).

For reference, the ratio of the electrolyte to the Fe powder used in the experiment was 0.2 to 2 molarity (M) per 1g of the Fe powder. Great variation in the reaction rate was not present when the ratio of the electrolyte exceeds 2M. That is, regarding the limitation in the amount of oxygen transmitting through the film containing the oxygen absorbent, it is sufficient if the amount of electron-transfer corresponding to the critical oxidation-reduction rate is 2M.

The conditions for measuring the reaction rate of the oxygen absorbent according to the present invention and the related art are as follows.

The first condition is that the oxygen absorbent is wrapped by spraying 0.5 ml of 2M electrolyte into a mixture containing 1g of Fe and 1g of activated carbon.

The second condition is that the oxygen absorbent is wrapped by spraying 0.5 ml of 2M electrolyte into a mixture containing 1g of Fe and 0.5g of activated carbon.

The third condition is that the oxygen absorbent is wrapped with 1.5g of activated carbon having the moisture content of 50% and 1g of Fe just like the conventional scheme.

(*1.4g of activated carbon having the moisture content of 40% = 1g of activated carbon + 0.5g of 2M electrolyte solution)

According to the experiment result under the above conditions, as shown in graph 1, 4 hours were required to reach oxygen concentration 10% under the first condition, but 10 to 11 hours were required to reach oxygen concentration 10% under the third condition (control group). In the case of the second condition where the amount of the activated carbon was reduced by a half, the reaction rate is slightly lowered. This is because the ratio of the activated carbon and Fe is lower than the ideal ratio and sufficient moisture can be ensured even though the amount of the activated carbon was reduced by a half. Thus, the moisture can be directly transferred to Fe so that the reaction rate corresponding to that of the first condition was present.

That is, the moisture spray scheme can ensure the reaction rate of the oxygen absorbent and save the prime cost by reducing the amount of the activated carbon by a half.

In addition, in order to clarify the experimental data, experiment was performed under the same conditions while omitting the electrolyte serving as the reaction accelerator and the experimental data of the reaction rate for the water spray type oxygen absorbent and the carrier type oxygen absorbent were obtained as shown in graph 2. Referring to graph 2, the effect of the moisture spray scheme is remarkable. In more detail, 5.5 hours are required to reach oxygen concentration 10% according to the moisture spray scheme, but 17.4% of remaining oxygen was present after 24 hours have lapsed according to the conventional scheme.

Preferably, 0.3 to 2g of activated carbon is added per 1g of powdered Fe. In addition, when the electrolyte has the 0.1M to 0.2M, particles of the activated carbon have the size of 8-50 meshes.

As described above, the method of manufacturing the oxygen absorbent according to the present invention has the following advantages.

First, the ideal amount of Fe-moisture donor can be input for the reaction regardless of the type and volume of the moisture donor and the critical moisture content. Different from zeolite, the activated carbon participates into the reaction while generating the cell reaction (see, graph 2 showing the reaction rate of the moisture spray type oxygen absorbent and the carrier type oxygen absorbent). That is, similar to the cell reaction, the activated carbon participates into the oxidation reaction of Fe with the reaction rate higher than that of zeolite, and the activated carbon and Fe must be mixed in the predetermined ratio for the purpose of the ideal reaction rate.

If the moisture content of the activated carbon is low, the amount of the activated carbon must be increased deviating from the ideal ratio to sufficiently transfer moisture, so that the prime cost may rise. The activated carbon has a larger particle size and a lower concentration as compared with Fe, so the activated carbon has a larger surface area. Since a sufficient amount of Fe sticks to the activated carbon, the sufficient reaction rate can be obtained when the ratio of Fe to the activated carbon is 1:0.8. However, according to the conventional scheme, the activated carbon can transfer moisture corresponding to the critical moisture content thereof. Thus, when it is needed to input 0.5ml water into the activated carbon having the critical moisture content of 30%, 1.66g of the activated carbon is necessary.

That is, about 0.8g of the activated carbon is unnecessarily wasted. In contrast, if the activated carbon has the higher moisture content, the particles of the activated carbon are roughly formed so that the strength of the activated carbon is weakened, thereby generating dust. In addition, the activated carbon may be easily broken when it is stirred with the moisture, so that additional loss may occur.

Second, the higher reaction rate can be obtained. That is, when the oxygen absorbent includes the activated carbon, Fe and water (electrolyte concentration), the experimental group employing the moisture spray scheme represents the reaction rate higher than that of the control group employing the conventional scheme by at least two times (see, graphs 1 and 2 showing the reaction rate of the moisture spray type oxygen absorbent and the carrier type oxygen absorbent). Thus, it is assumed that the moisture is rapidly transferred to Fe so that the initial reaction rate rises and the Fe sufficiently receives the moisture so that the chain reaction occurs.

Third, it is possible to control the initiation of the reaction. Oxygen and moisture are necessary to allow Fe to react with oxygen. If the interior of the oxygen absorbent is dried, Fe may not react with oxygen unless the external humidity is high. However, since the water pocket containing the electrolyte dissolved in water is provided in the oxygen absorbent, the user may burst the water pocket at the desired time to use the electrolyte in the reaction. The electrolyte solution output from the water pocket 400 is not evaporated into vapors, but directly transferred to Fe, so that the reaction rate can be improved.

The oxygen absorbent according to the present invention is a patch type, that is, a water pocket type. In addition, from among the contents of the oxygen absorbent, the electrolyte solution is solely packaged in a waterproof material to manufacture the water pocket 400 having the size of a little fingernail (see, FIG. 19), and the water pocket 400 is packaged and sealed together with the dried Fe and the reaction catalyst (moisture donor) in the form of the patch.

Then, the patch is sealed with the secondary wrapper having low moisture permeability.

In this manner, the oxygen absorbent patch may start the reaction at a desired time required by the consumer with the same effect as that of the moisture spray type oxygen absorbent.

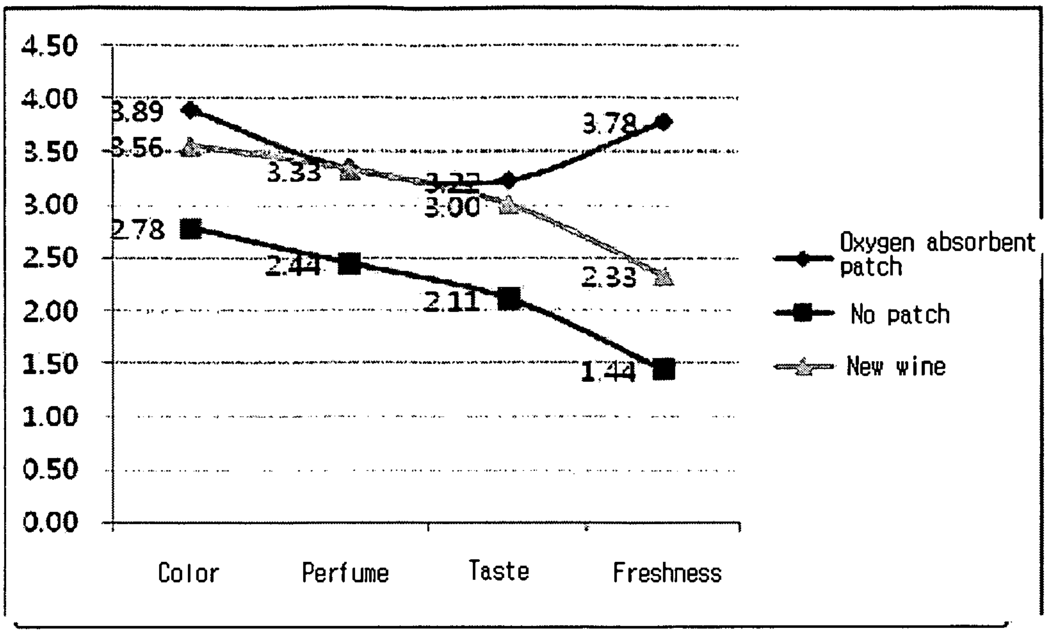


<sensory evaluation for wine stored with oxygen absorbent patch and new wine>

When the oxygen absorbent according to the present invention is employed, superior characteristics are represented in the sensory evaluation for the wine. That is, 250ml of Cabernet sauvignon wine, which is French wine made in 2005, is filled into two bottles of 750ml, and these two bottles are stored for five days at the temperature of 4°C in a state in which one bottle is provided with the wine cap having the oxygen absorbent and the other bottle is provided with the wine cap only. Then, the blinding test is performed with respect to the wine stored in the two bottles and new Cabernet sauvignon wine. Nine trainees are selected from the Kangnam wine school, which is the wine educational institute, as panels for the sensory evaluation and the purpose of the test is explained to the trainees such that the trainees can evaluate the taste, color, perfume and freshness of the wine based on the 5-point score (very good (5 point), good (4 point), normal (3 point), bad (2 point) and very bad (1 point)).

As can be seen from the above graph, the wine stored with the oxygen absorbent represents the higher score in the sensory evaluation as compared with the wine without the oxygen absorbent. Especially, the wine stored with the oxygen absorbent represents the higher score in the freshness than that of the new wine. The grapes for the wine used in the sensory evaluation are cultivated from the region of Cabernet sauvignon and these grapes are famous for strong tannin components. In the initial stage, the tannin component rapidly reacts with oxygen among the components of the wine. The tannin component has the feature of astringent taste.

That is, when the oxygen absorbent removes the oxygen in the initial stage, the wine is also partially oxidized so that the tannin component is reduced and the astringent taste is attenuated. Thus, the trainees may feel the freshness flavor just like fruit juice. Meanwhile, in the case of the wine stored without the oxygen absorbent patch, the trainees feel strong bitter taste and sour taste, that is, the wine is deformed so that the trainees may not drink the wine any more.

The oxygen absorbents 20D and 20E prepared according to the present invention are wrapped with the secondary wrapper such that the oxidation reaction may occur at the desired time required by the consumer. In this state, the oxygen absorbents 20D and 20E are stored and circulated. FIG. 20 shows the secondary wrapper 500, the oxygen absorbents 20D and 20E, and the structure of the oxygen absorbents 20D and 20E wrapped with the secondary wrapper 500.

Different from the breathable wrapper 22 made from the porous film having air permeability, the secondary wrapper 500 is intended to shield the oxidation reaction, so the secondary wrapper 500 is made from a film having low oxygen permeability, such as an aluminum deposition film, EVOH, nylon, PVDC, or PET.

Preferably, the secondary wrapper 500 has the oxygen permeability less than 10 cc.mil/100in$^2$xdayxatm, and

vapor permeability less than 0.8 WVTR (38°C and 95 vs 0% RH). In the case of the oxygen absorbent 20E having the water pocket, the secondary wrapper 500 can effectively control the reaction if the secondary wrapper 500 has low vapor permeability.

[Industrial Applicability]

As described above, according to the present invention, the oxygen absorbent can absorb the oxygen at the absorption rate about two times higher than that of the conventional oxygen absorbent, so that the oxygen absorbent can preserve foods. In addition, since the oxygen absorbent is prepared in the form of the patch, the oxygen absorbent can be compatibly used for various product groups (fish cakes, soybean sources and pastes, and dried foods) without causing the additional cost.

In particular, in the case of chilled products, which are influenced by the propagation of microorganisms, since the oxygen absorption closely relates to the growth of the microorganisms, the period of circulation for the chilled products may be lengthened if the oxygen absorbent is employed together with various antibiotic substances.

Meanwhile, under the circumstance that there is no portable product capable of rapidly removing the oxygen after the wine is resealed, the present invention provides the oxygen absorbent patch having high functions and the wine bottle sealing cap for movably fixing the oxygen absorbent patch in the wine bottle, so that the effective value of the wine bottle resealing cap may be increased.

Although the preferred embodiments of the present invention have been described, it is understood that the present invention should not be limited to these preferred embodiments but various changes and modifications can be made by one ordinary skilled in the art within the spirit and scope of the present invention as hereinafter claimed.

## Claims

1. A wine bottle cap assembly comprising:

   a cap body including an insertion part inserted into an inlet of a wine bottle to seal the inlet of the wine bottle;
   an oxygen absorbent for absorbing oxygen in the wine bottle; and
   a fixing device for detachably fixing the oxygen absorbent below the insertion part in the wine bottle such that the oxygen absorbent is spaced apart from the insertion part by a predetermined distance.

2. The wine bottle cap assembly of claim 1, wherein the fixing device fixes the oxygen absorbent such that the oxygen absorbent is movable in the wine bottle.

3. The wine bottle cap assembly of claim 2, wherein the fixing device includes a fixture integrally formed with the insertion part and prepared in a form of a hook, and a fixing hole formed in the oxygen absorbent such that the fixture is inserted into the fixing hole.

4. The wine bottle cap assembly of claim 3, wherein the fixture has elasticity and the fixing device includes a locking slot formed in the insertion part such that a tip of the fixture is locked with the locking slot.

5. The wine bottle cap assembly of claim 3, wherein the fixture is provided at a lower end thereof with a support protrusion to prevent the oxygen absorbent from being separated from the fixture.

6. The wine bottle cap assembly of claim 2, wherein the fixing device includes a fixture integrally formed with the insertion part and formed with a coupling hole, a fixing hole formed in the oxygen absorbent, and a coupling member coupled into the coupling hole by passing through the fixing hole to fix the oxygen absorbent to the fixture.

7. The wine bottle cap assembly of claim 1, wherein the oxygen absorbent includes contents and a breathable wrapper receiving the contents therein and including a material having air-permeable and waterproof properties, and the contents include oxygen absorbing components and buoyant components having specific gravity lighter than that of water to allow the oxygen absorbent to float on wine.

8. The wine bottle cap assembly of claim 1, wherein the oxygen absorbent includes buoyant components such as expandable synthetic resin or activated carbon.

9. The wine bottle cap assembly of claim 1, wherein the oxygen absorbent includes contents having oxygen absorbing

components, a breathable wrapper receiving the contents therein and including a material having air-permeable and waterproof properties, and a buoyant member coupled to an outer surface of the breathable wrapper and including buoyant components having specific gravity lighter than that of water to allow the oxygen absorbent to float on wine.

**10.** The wine bottle cap assembly of claim 2, wherein the fixing device includes a fixture integrally formed with the insertion part and prepared in a form of a hook, and a connection member prepared in a form of a string having a predetermined length to connect the fixture to the oxygen absorbent.

**11.** The wine bottle cap assembly of claim 2, wherein the fixing device includes a connection member prepared in a form of a string having a predetermined length, one end of the connection member is fixed to the oxygen absorbent, and an opposite end of the connection member is fixedly secured between the cap body and the inlet of the wine bottle.

**12.** The wine bottle cap assembly of claim 2, wherein the fixing device is prepared in a form of a nipper connected to the cap body to pick up one side of the oxygen absorbent.

**13.** The wine bottle cap assembly of claim 1, wherein the oxygen absorbent includes a breathable wrapper and contents inserted into the breathable wrapper, and the contents include Fe, a moisture donor and a water pocket containing an electrolyte solution obtained by mixing an electrolyte with water.

**14.** The wine bottle cap assembly of claim 13, wherein the water pocket includes a waterproof film or a gelatin capsule.

**15.** The wine bottle cap assembly of claim 1, wherein the oxygen absorbent includes a breathable wrapper and contents inserted into the breathable wrapper, and the contents include Fe, a moisture donor, and an electrolyte solution directly transferred into the breathable wrapper.

**16.** The wine bottle cap assembly of claim 13 or 15, wherein the moisture donor includes at least one or two selected from the group consisting of activated carbon, natural zeolite, synthetic zeolite, silica gel, activated clay, activated aluminum oxide, clay, diatomaceous earth, kaolin, talc, bentonite, sepiolite, attapulgite, magnesium oxide, iron oxide, aluminum hydroxide, magnesium hydroxide, iron hydroxide, magnesium silicate, aluminum silicate, synthetic hydrotalcite, and amine-loaded porous silica.

**17.** The wine bottle cap assembly of claim 13 or 15, wherein a ratio of the moisture donor to powdered Fe is 0.3 to 1:1.

**18.** The wine bottle cap assembly of claim 13 or 15, wherein a particle size of the moisture donor is 8 to 50 meshes.

**19.** The wine bottle cap assembly of claim 13 or 15, wherein a ratio of the electrolyte solution to powdered Fe is 0.2 to 1:1.

**20.** The wine bottle cap assembly of claim 13 or 15, wherein the electrolyte of the electrolyte solution has concentration of 0.1M to 2M (molarity).

**21.** The wine bottle cap assembly of claim 1, wherein the oxygen absorbent is secondarily wrapped by a secondary wrapper including a material having higher oxygen barrier property until the oxygen absorbent is fixed to the fixing device.

**22.** The wine bottle cap assembly of claim 21, wherein the secondary wrapper has oxygen permeability less than 10 cc.mil/100in$^2$xdayxatm.

**23.** The wine bottle cap assembly of claim 21, wherein the secondary wrapper has vapor permeability less than 0.8 WVTR (38°C and 95 vs 0% RH).

**24.** A method of manufacturing a wine bottle cap assembly, the method comprising:

preparing an oxygen absorbent to manufacture the wine bottle cap assembly including a cap body having an insertion part inserted into an inlet of a wine bottle to seal the inlet of the wine bottle, the oxygen absorbent for absorbing oxygen in the wine bottle and a fixing device for detachably fixing the oxygen absorbent below the insertion part in the wine bottle such that the oxygen absorbent is spaced apart from the insertion part by a predetermined distance, wherein

the preparing of the oxygen absorbent includes:
inserting Fe and a moisture donor into a breathable wrapper; and
separately inserting an electrolyte solution obtained by mixing an electrolyte with liquid into the breathable wrapper.

**25.** The method of claim 24, wherein the electrolyte solution is inserted into the breathable wrapper at a constant speed and a constant time interval by a control valve.

**26.** A method of manufacturing a wine bottle cap assembly, the method comprising:

preparing an oxygen absorbent to manufacture the wine bottle cap assembly including a cap body having an insertion part inserted into an inlet of a wine bottle to seal the inlet of the wine bottle, the oxygen absorbent for absorbing oxygen in the wine bottle and a fixing device for detachably fixing the oxygen absorbent below the insertion part in the wine bottle such that the oxygen absorbent is spaced apart from the insertion part by a predetermined distance, wherein
the preparing of the oxygen absorbent includes:
forming a water pocket by inserting an electrolyte solution obtained by mixing an electrolyte with liquid into a wrapper having a waterproof function;
inserting Fe and a moisture donor into a breathable wrapper; and
inserting the water pocket into the breathable wrapper by free-falling the water pocket.

**27.** An apparatus for manufacturing a wine bottle cap assembly, the apparatus comprising:

a device for preparing an oxygen absorbent to manufacture the wine bottle cap assembly including a cap body having an insertion part inserted into an inlet of a wine bottle to seal the inlet of the wine bottle, the oxygen absorbent for absorbing oxygen in the wine bottle and a fixing device for detachably fixing the oxygen absorbent below the insertion part in the wine bottle such that the oxygen absorbent is spaced apart from the insertion part by a predetermined distance, wherein
the oxygen absorbent includes a breathable wrapper and contents inserted into the breathable wrapper,
the contents include Fe, a moisture donor and an electrolyte solution directly transferred to the breathable wrapper,
the device for preparing the oxygen absorbent includes:
an input port for receiving materials;
a sealer for sealing one open side of the breathable wrapper; and
a pipe for transmitting the electrolyte solution, and
an end of the pipe is located adjacent to the sealer.

**28.** The apparatus of claim 27, wherein the device for preparing the oxygen absorbent further includes a control valve for supplying the electrolyte solution at a constant speed and a constant time interval.

【Fig 1】

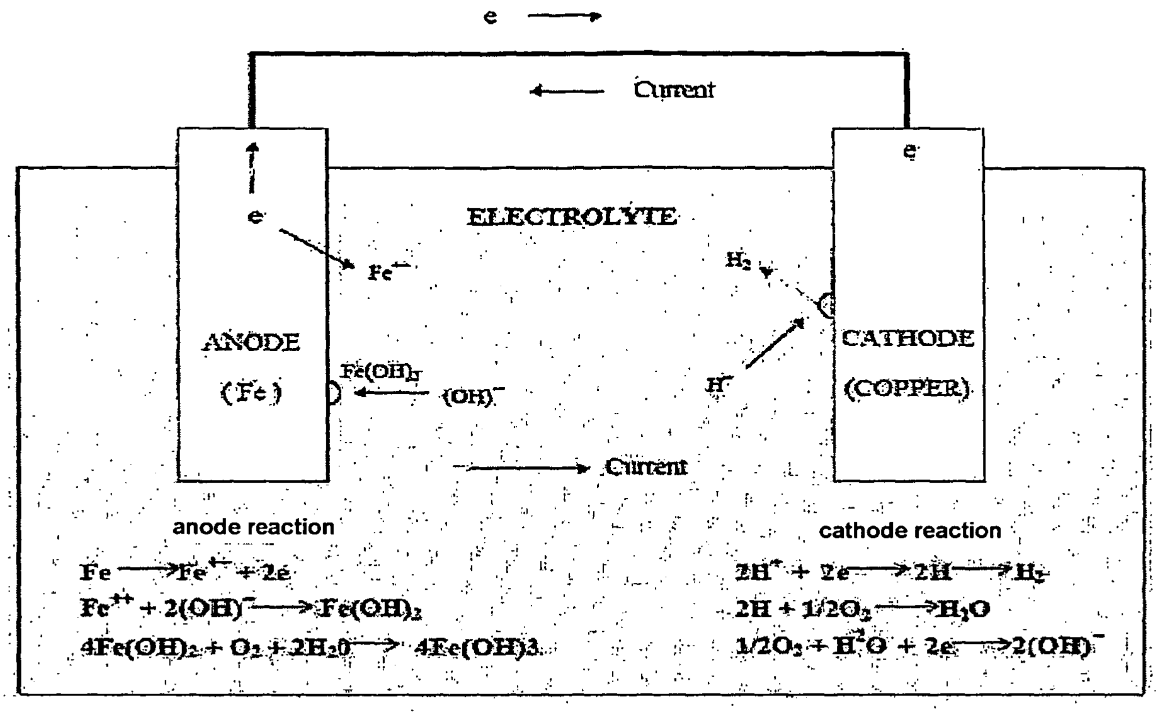
e
Current
e
ELECTROLYTE
Fe++
H2
ANODE
(Fe)
Fe(OH)2
(OH)-
CATHODE
(COPPER)
H+
Current
anode reaction
Fe → Fe++ + 2e
Fe++ + 2(OH)- → Fe(OH)2
4Fe(OH)2 + O2 + 2H2O → 4Fe(OH)3
cathode reaction
2H+ + 2e → 2H → H2
2H + 1/2O2 → H2O
1/2O2 + H2O + 2e → 2(OH)-

【Fig 2】

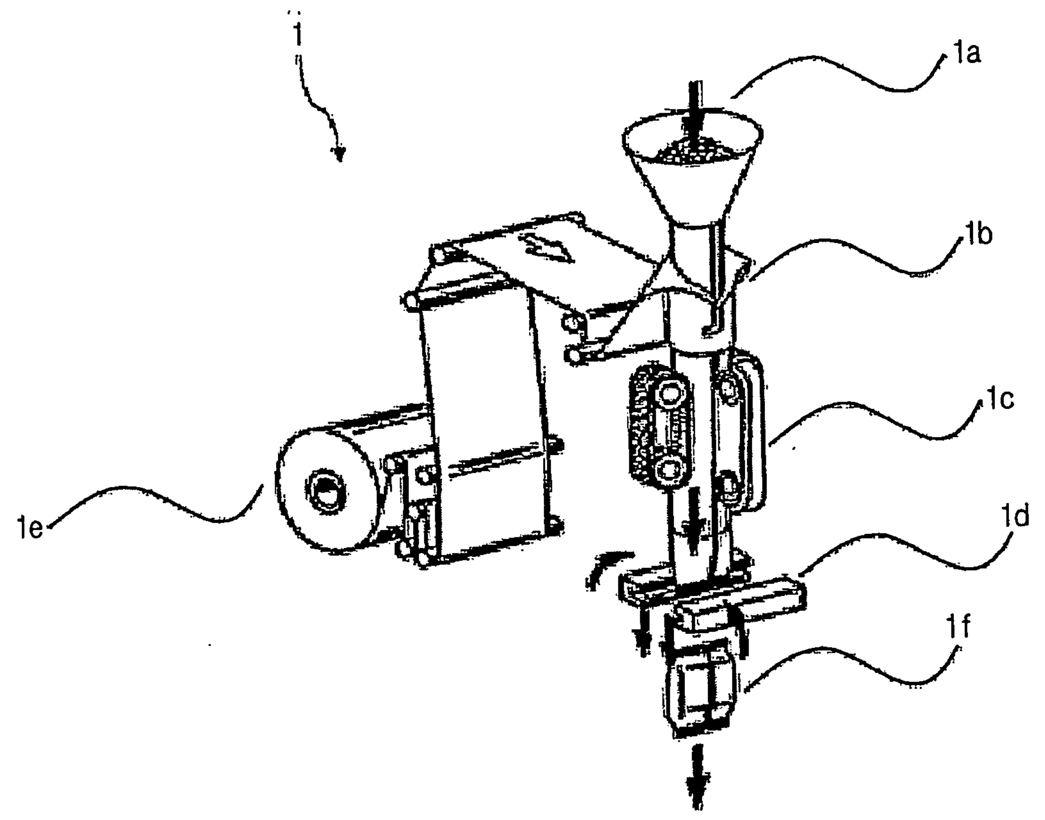

【Fig 3】

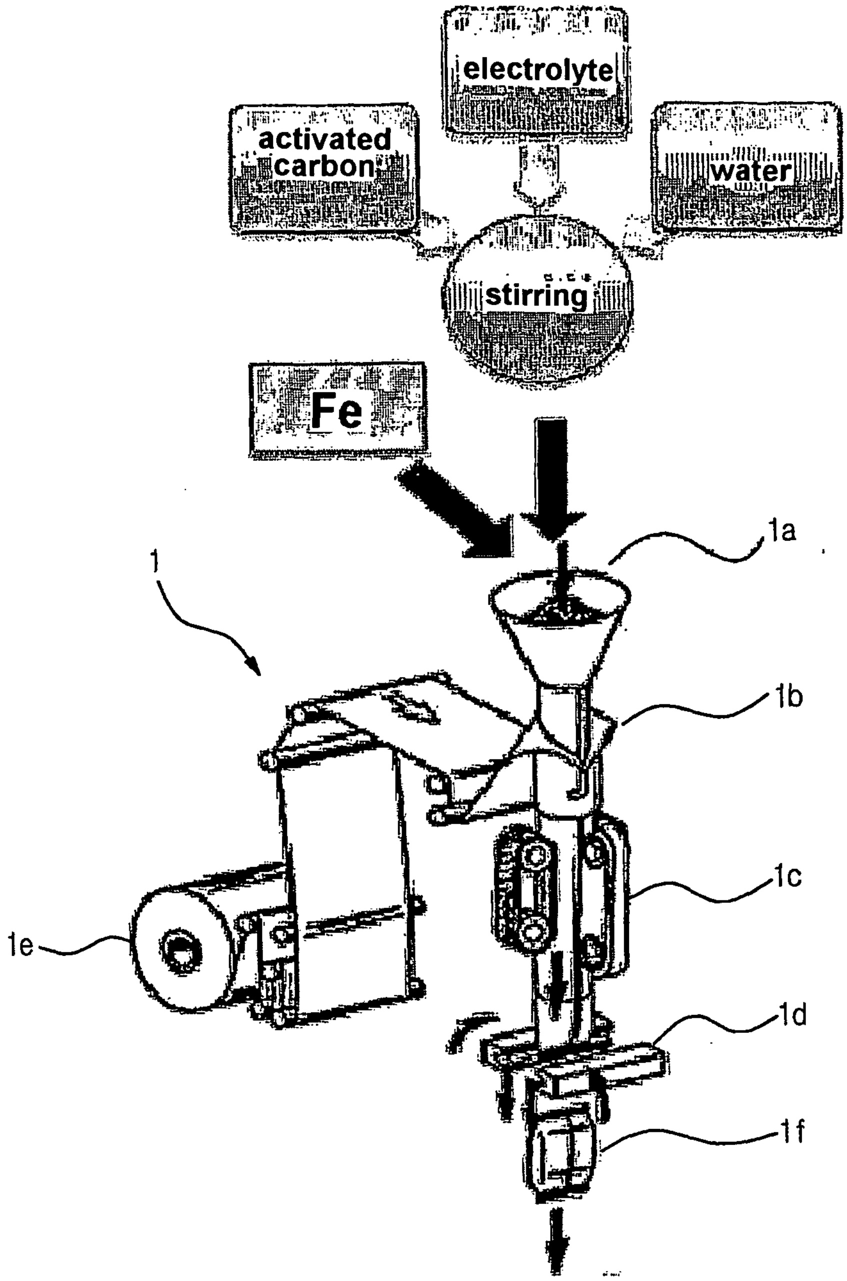
electrolyte
activated carbon
water
stirring
Fe
1a
1
1b
1c
1e
1d
1f

【Fig 4】

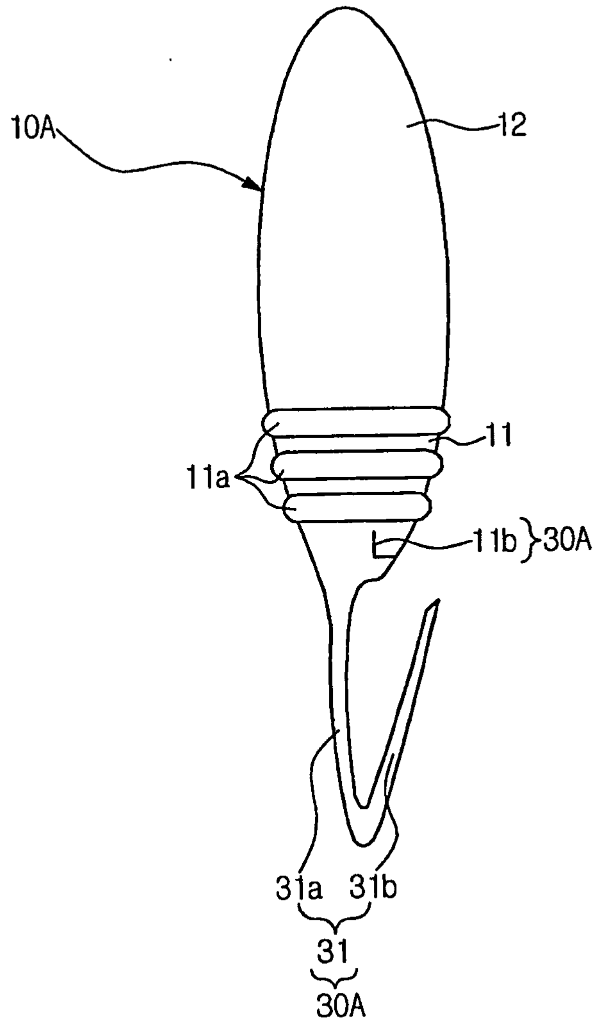

【Fig 5】

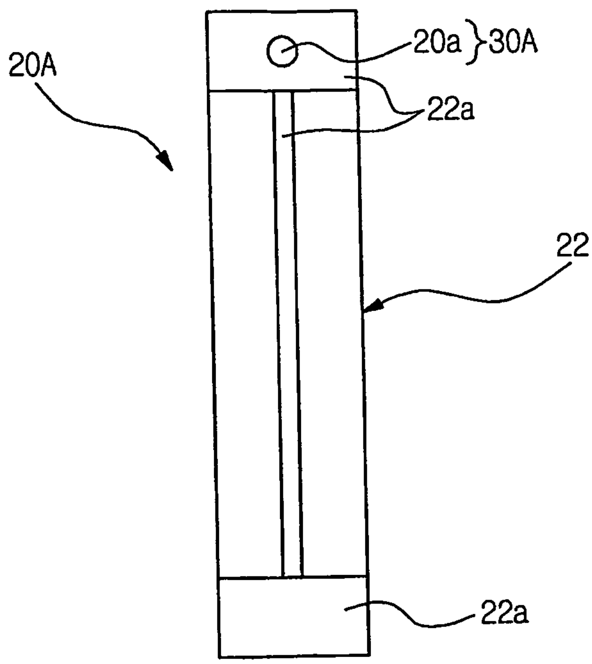

【Fig 6】

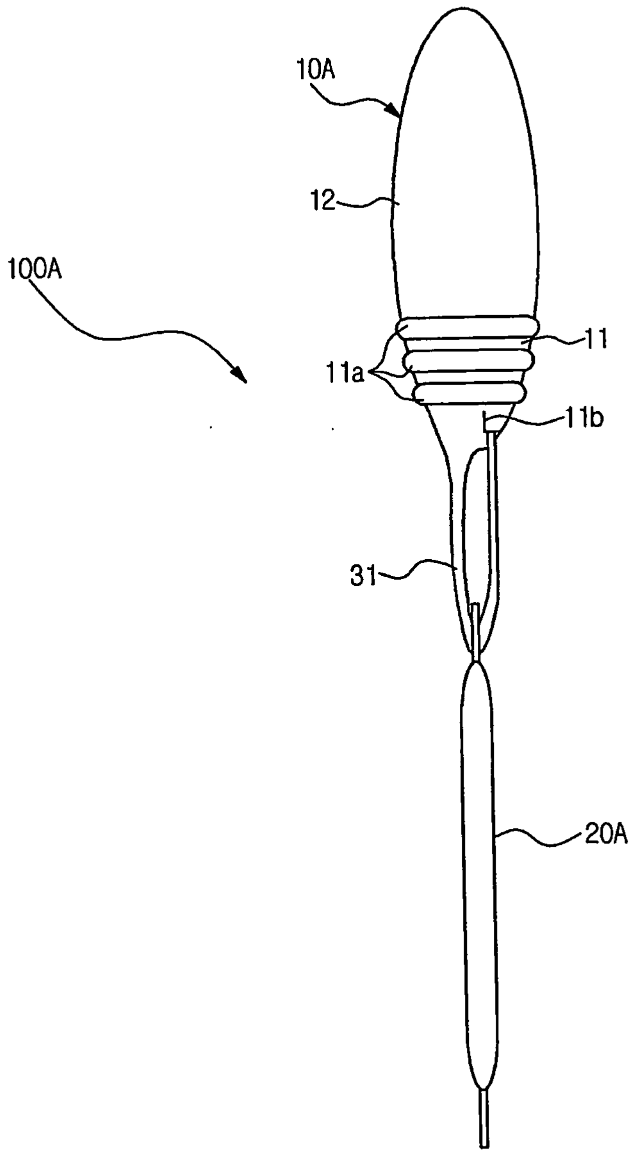

【Fig 7】

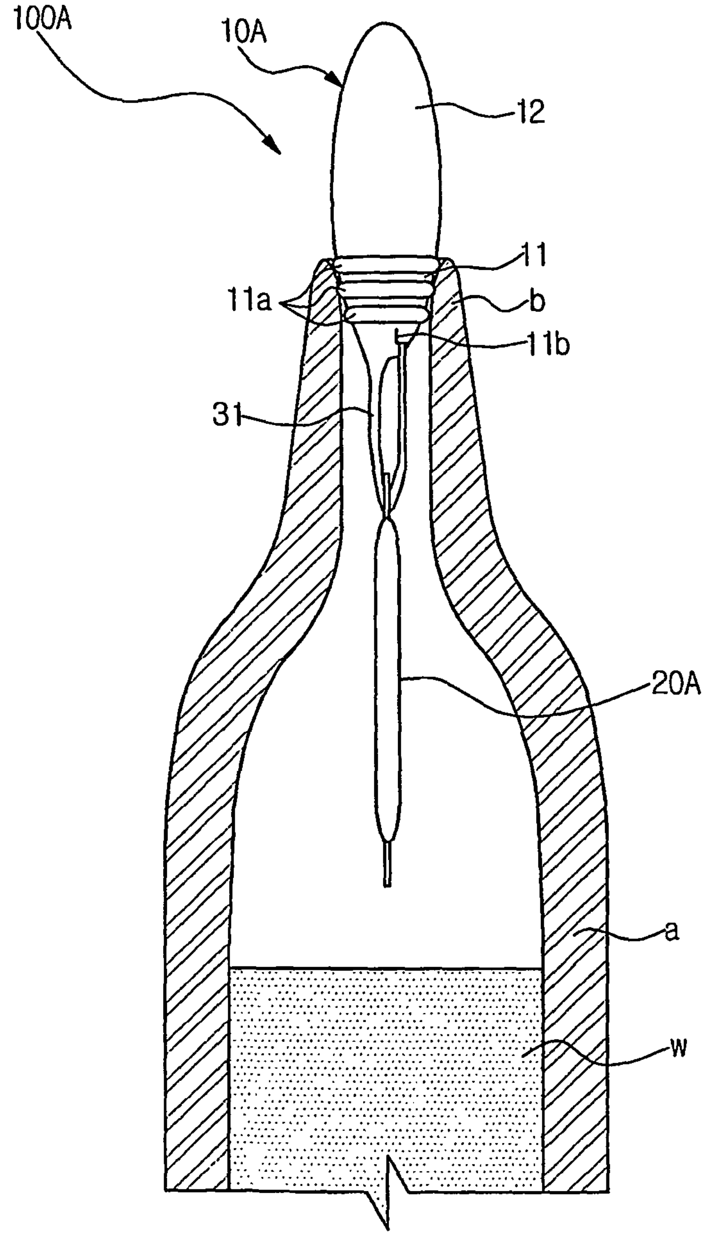

【Fig 8】

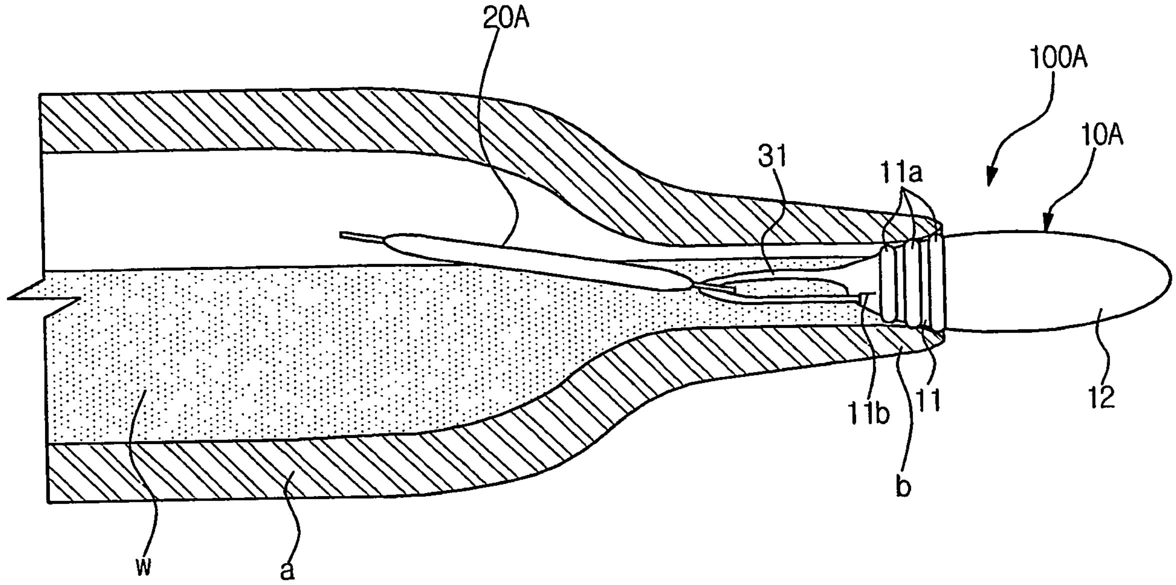

【Fig 9】

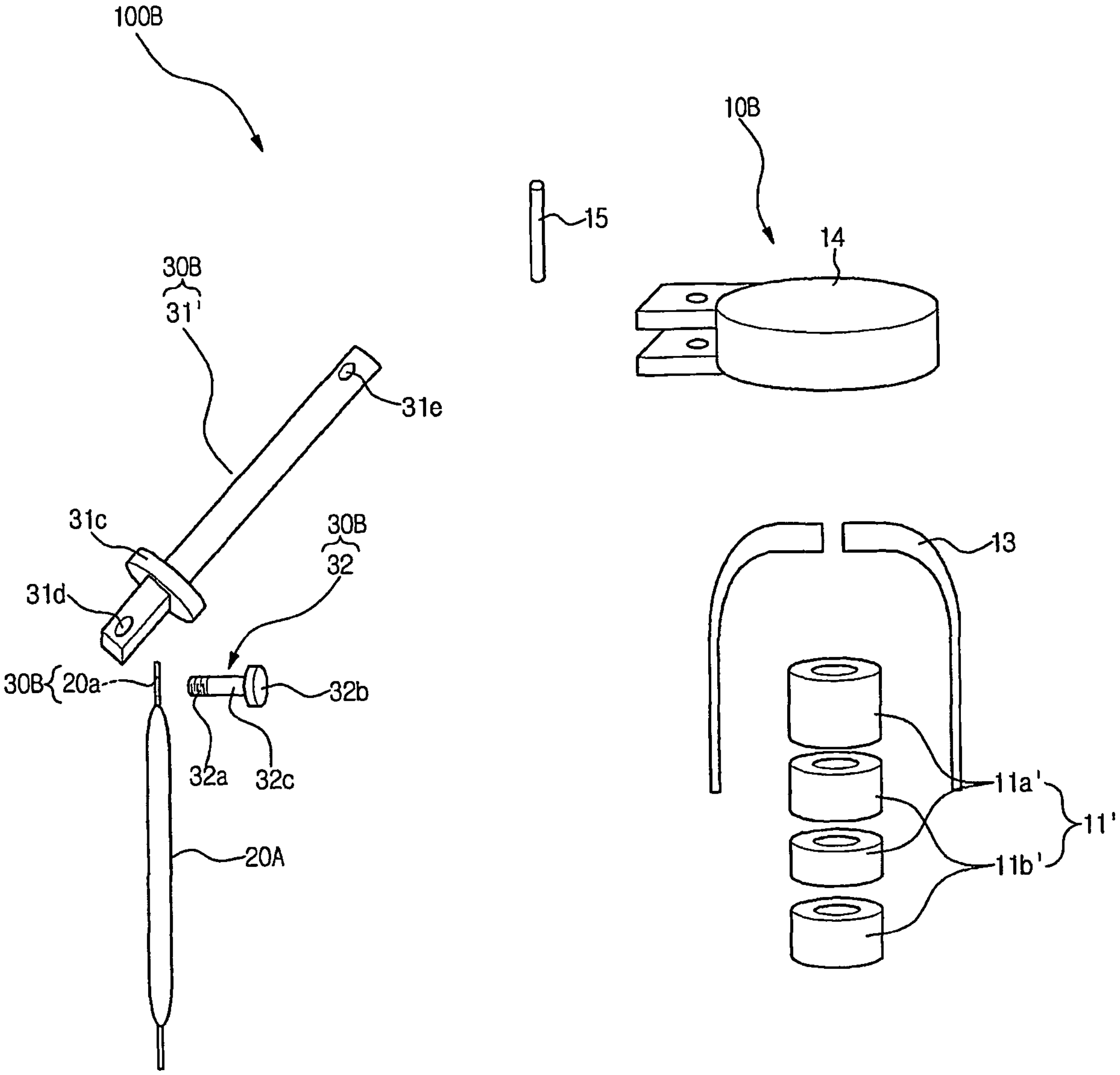
100B
10B
15
14
30B
31'
31e
31c
30B
32
31d
30B
20a
32b
32a
32c
20A
13
11a'
11'
11b'

【Fig 10】

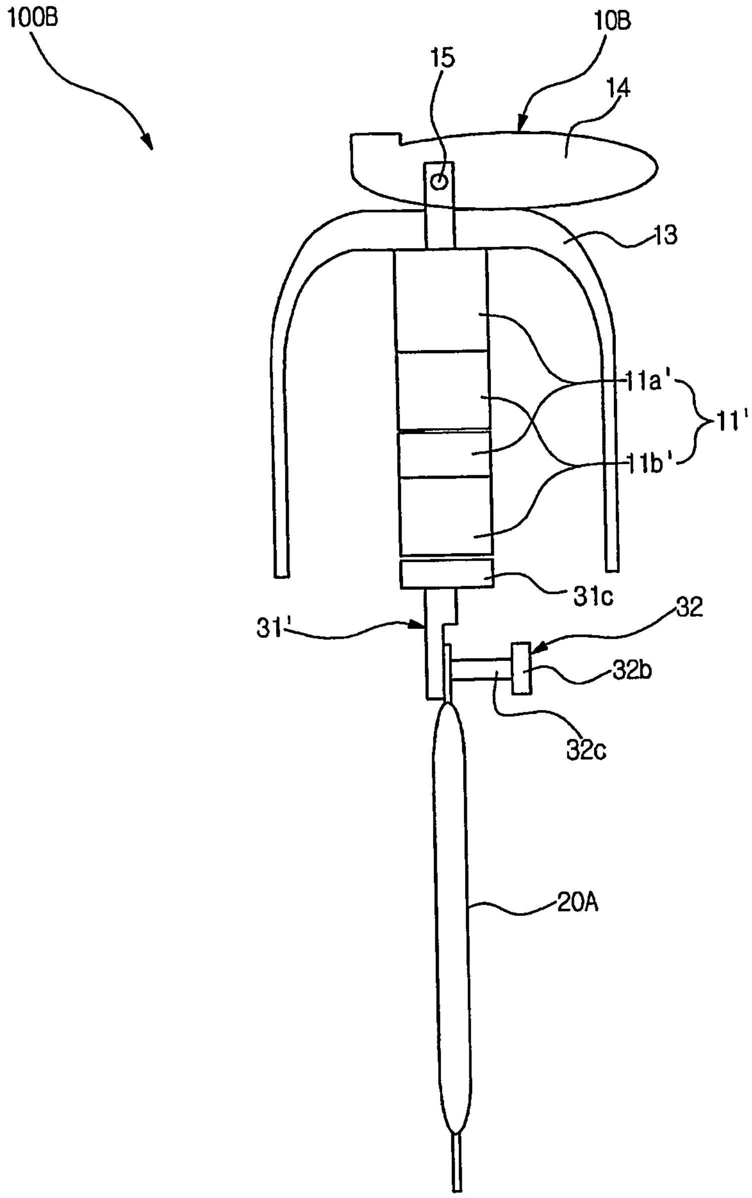

【Fig 11】

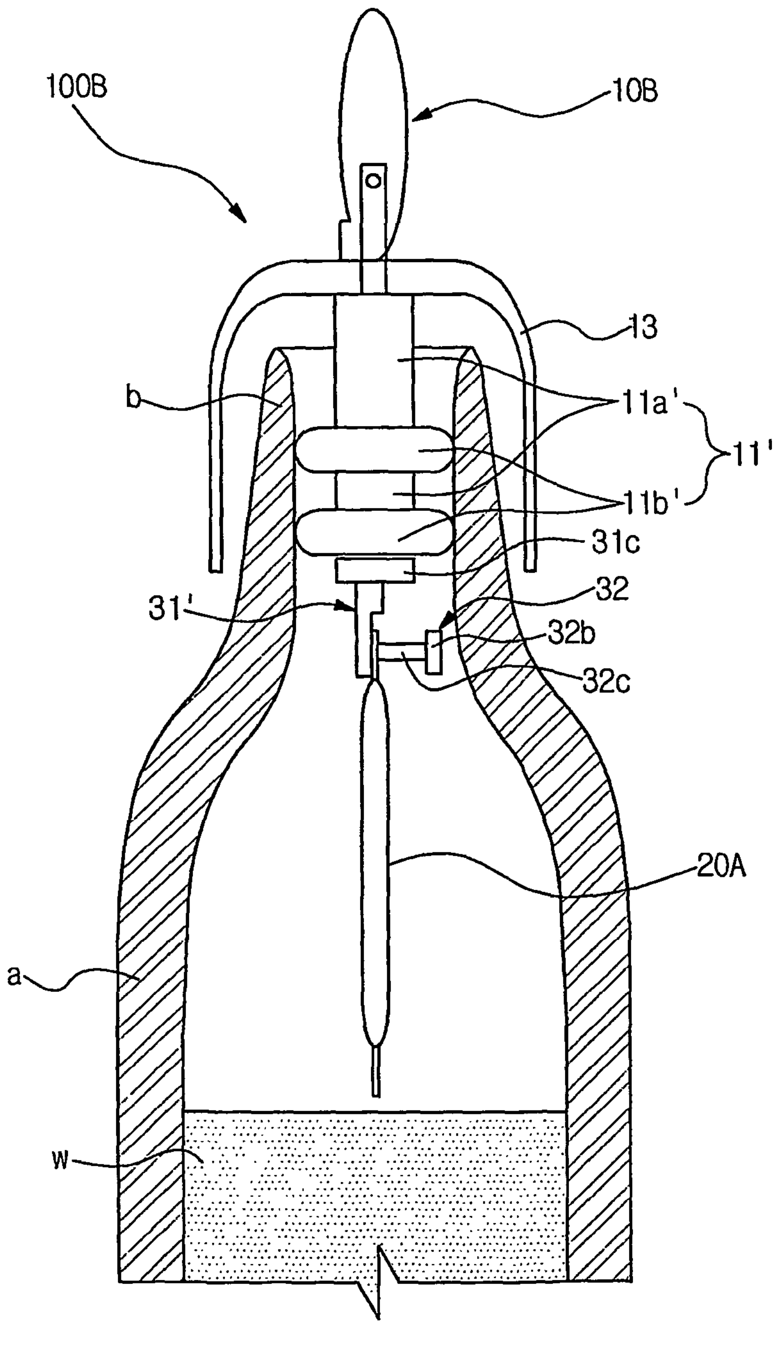

【Fig 12】

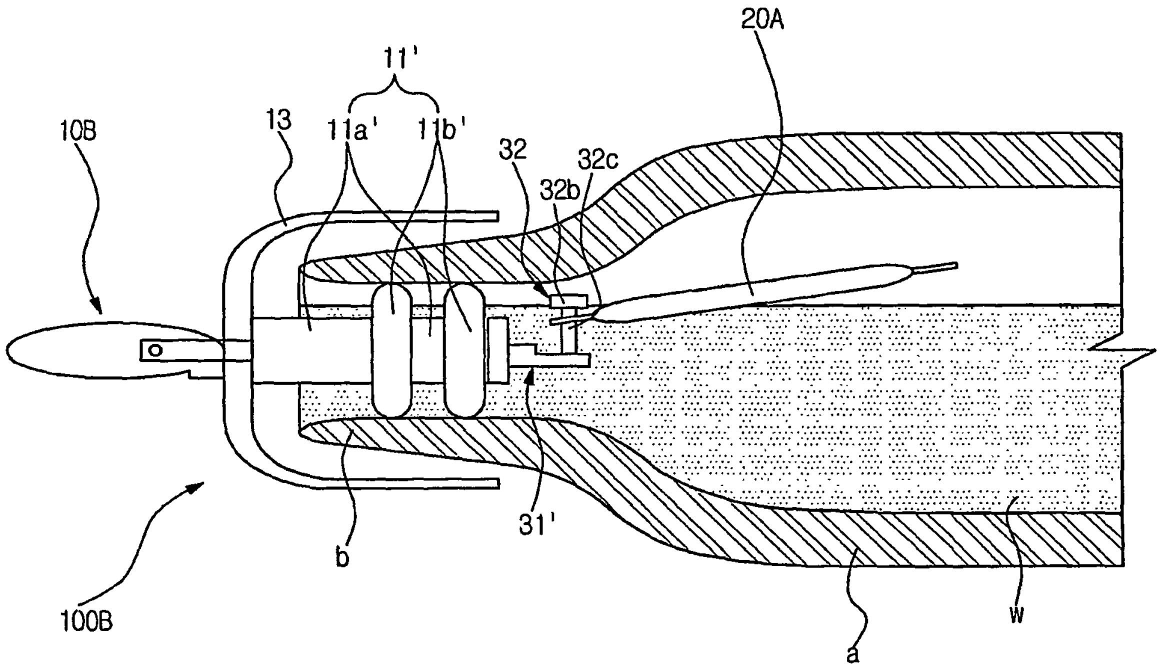

【Fig 13】

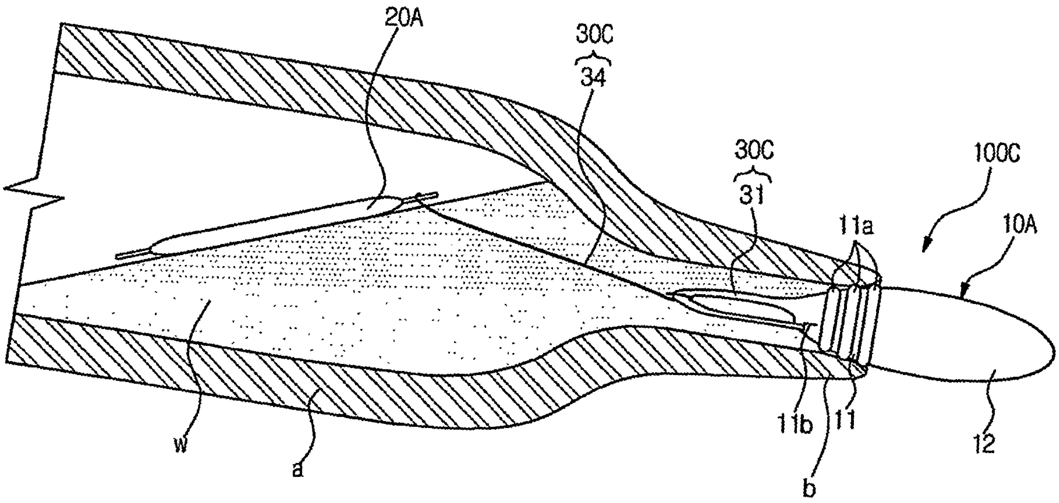

【Fig 14】

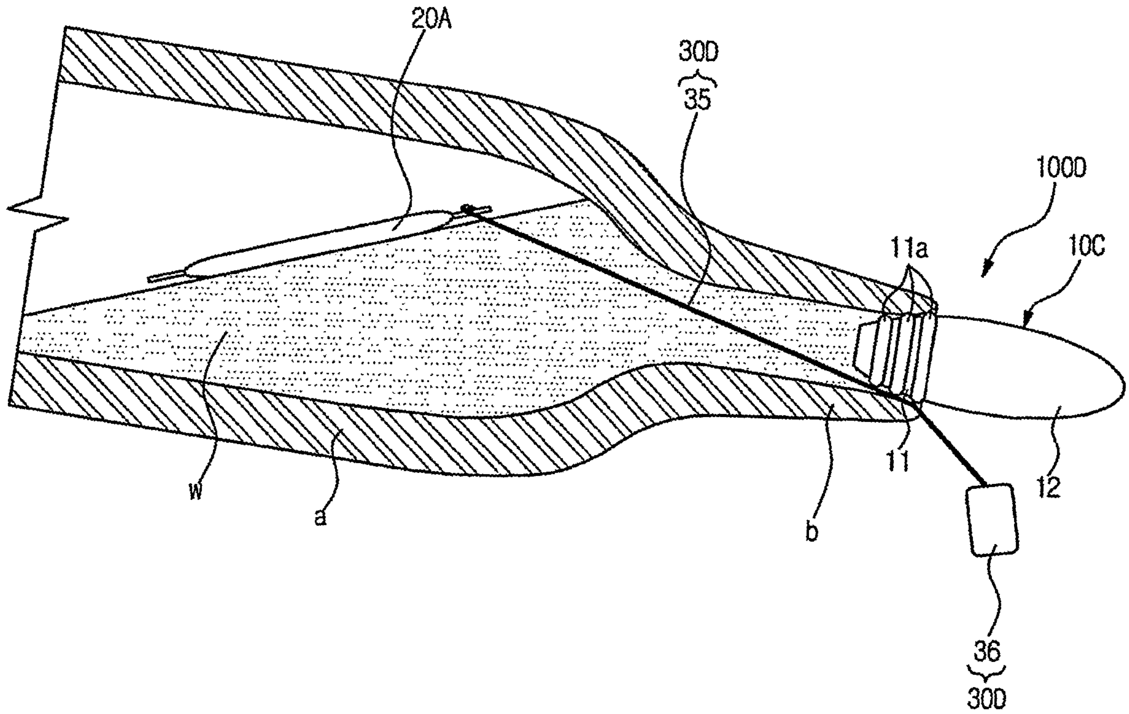

【Fig 15】

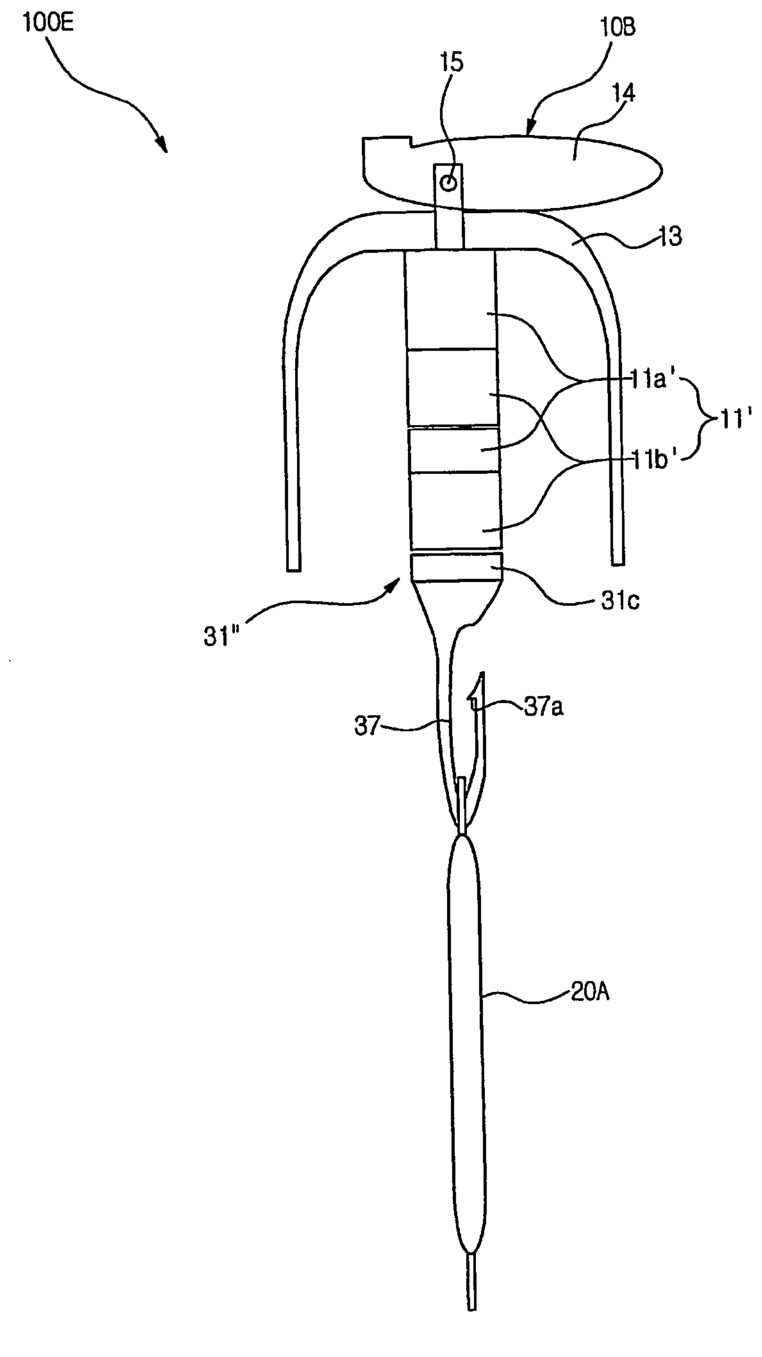

【Fig 16】

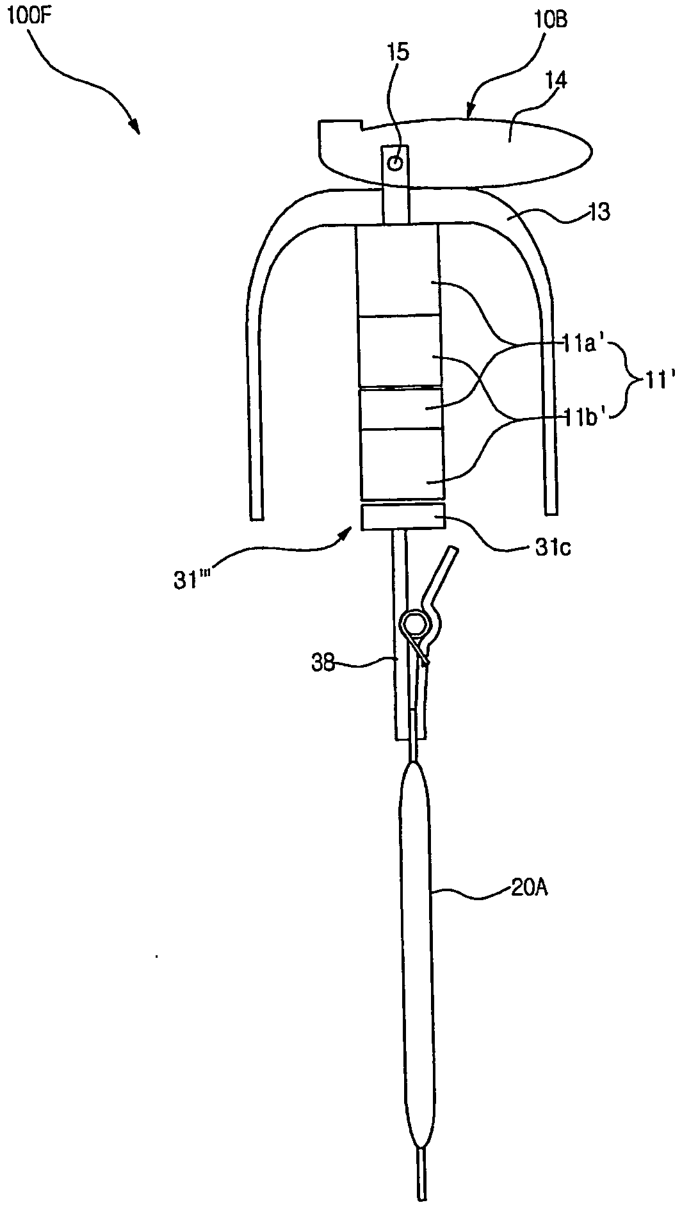

【Fig 17】

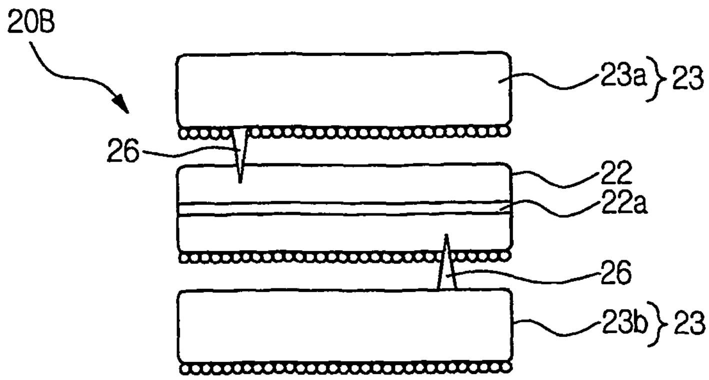


【Fig 18】

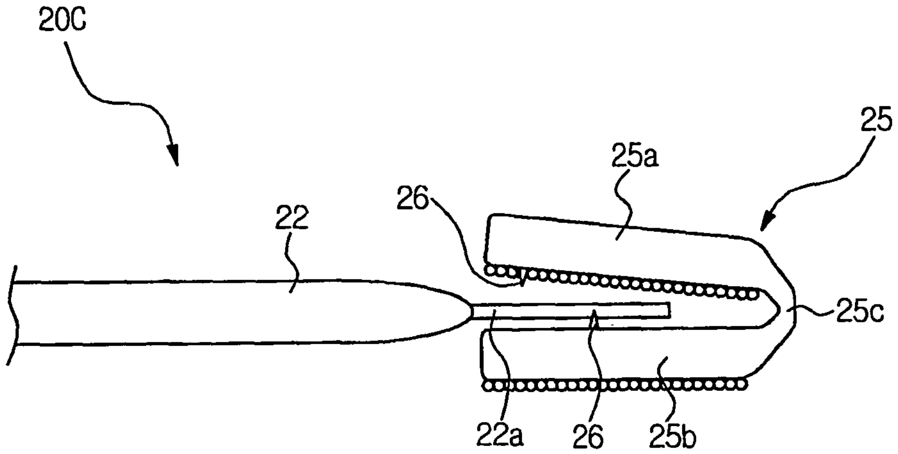

【Fig 19】

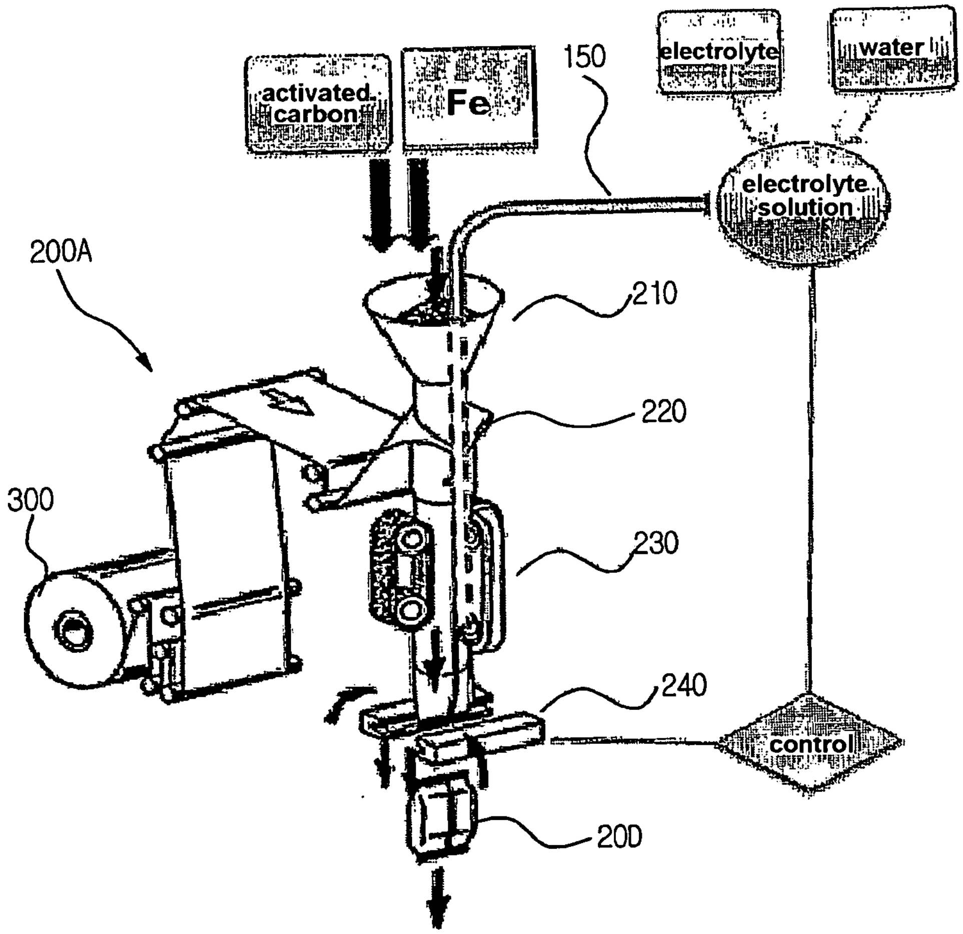
activated carbon
Fe
150
electrolyte
water
electrolyte solution
200A
210
220
300
230
240
control
200D

【Fig 20】

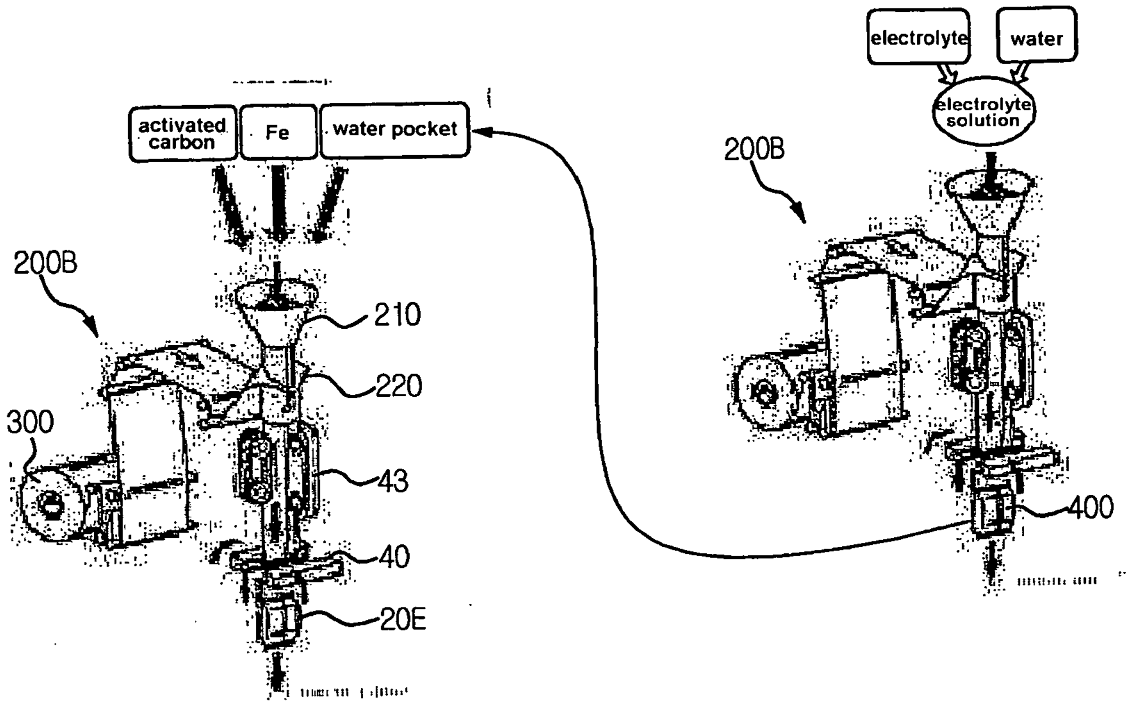
activated carbon
Fe
water pocket
200B
210
220
300
43
40
20E
electrolyte
water
electrolyte solution
200B
400

【Fig 21】

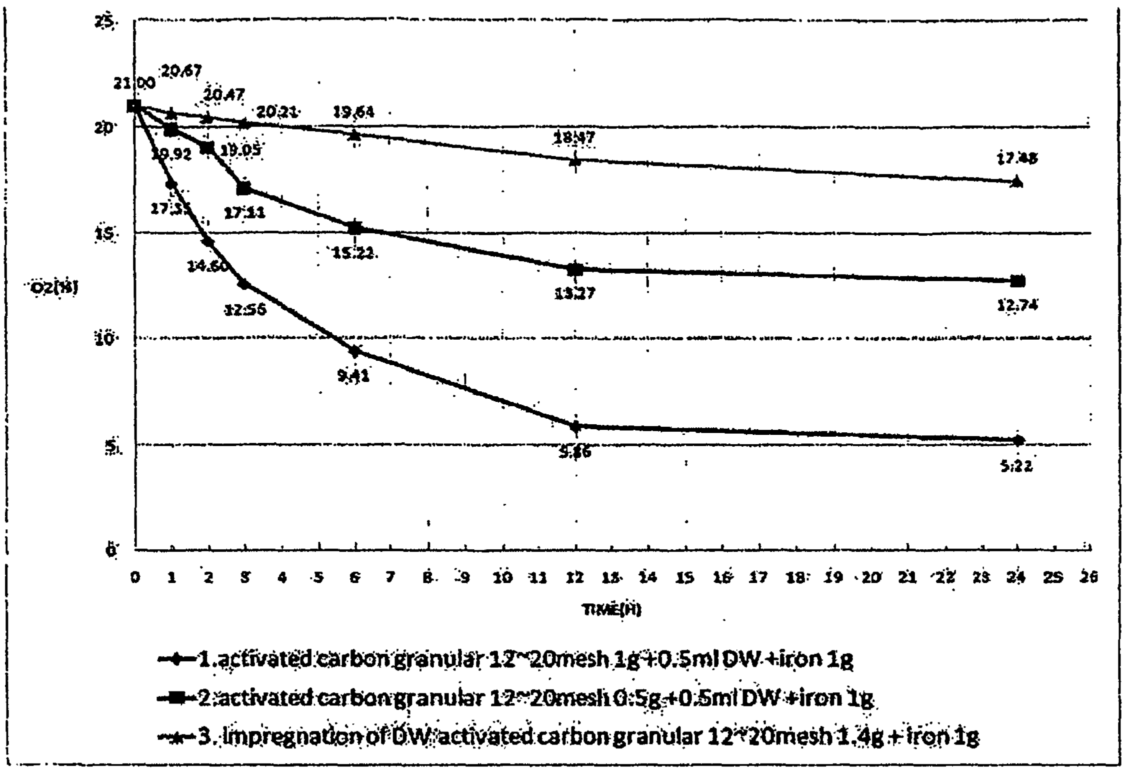
O2(%)
TIME(H)
21.00
20.67
20.47
20.21
19.64
18.47
17.48
19.92
19.05
17.11
15.22
13.27
12.74
17.35
14.60
12.56
9.41
5.86
5.22
1.activated carbon granular 12~20mesh 1g+0.5ml DW+iron 1g
2.activated carbon granular 12~20mesh 0.5g+0.5ml DW+iron 1g
3. Impregnation of DW activated carbon granular 12~20mesh 1.4g + iron 1g

【Fig 22】

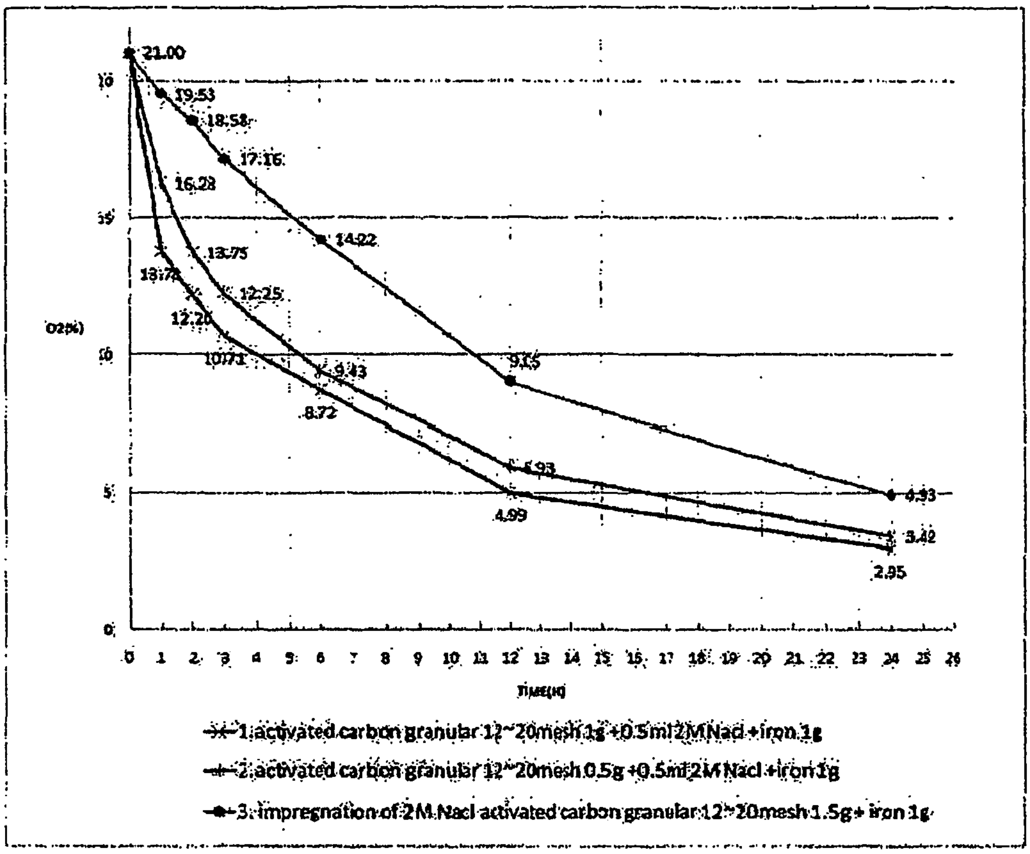
21.00
19.53
18.58
17.16
16.28
14.22
13.75
13.72
12.25
12.20
10.71
9.15
9.43
8.72
5.93
4.93
4.99
3.42
2.95
0 1 2 3 4 5 6 7 8 9 10 11 12 13 14 15 16 17 18 19 20 21 22 23 24 25 26
1.activated carbon granular 12~20mesh 1g +0.5ml 2M Nacl +iron 1g
2.activated carbon granular 12~20mesh 0.5g +0.5ml 2M Nacl +iron 1g
3. impregnation of 2M Nacl activated carbon granular 12~20mesh 1.5g+ iron 1g

【Fig 23】

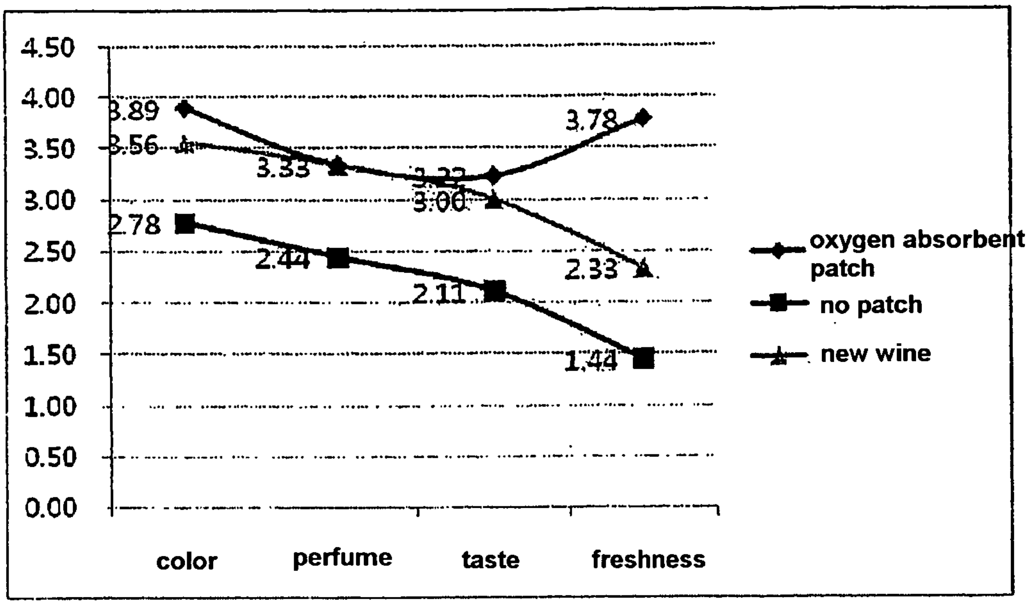
4.50
4.00
3.50
3.00
2.50
2.00
1.50
1.00
0.50
0.00
3.89
3.56
3.33
3.00
3.78
2.78
2.44
2.11
2.33
1.44
color
perfume
taste
freshness
oxygen absorbent patch
no patch
new wine

【Fig 24】

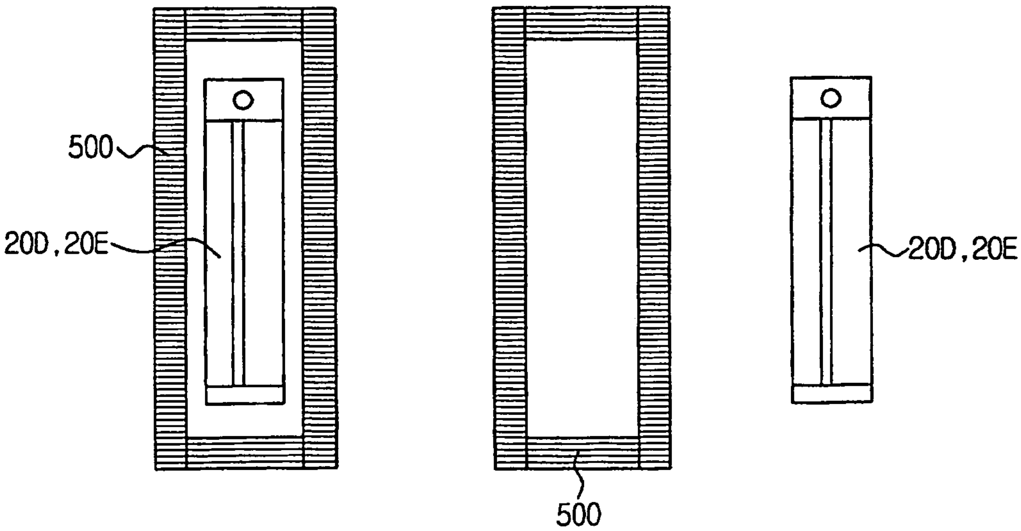
500
20D,20E
500
20D,20E